# EUROPÄISCHE PATENTSCHRIFT

(11) **EP 2 700 597 B1**
(45) Veröffentlichungstag und Bekanntmachung des Hinweises auf die Patenterteilung: **14.10.2015**
(21) Anmeldenummer: 13180285.2
(22) Anmeldetag: 13.08.2013
(51) Int. Cl.: B65G 59/10, B65G 57/30, B65G 59/06

(54) **Vorrichtung und Verfahren zum Stapeln oder Entstapeln von Kisten**
Apparatus and method for stacking or unstacking crates
Dispositif et procédé pour empiler ou désempiler des caisses

(30) Priorität: 20.08.2012 DE 202012103138 U; 20.08.2012 DE 102012107613
(43) Veröffentlichungstag der Anmeldung: 26.02.2014
(73) Patentinhaber: Reich, Konrad, 83135 Schechen (DE)
(72) Erfinder: Reich, Konrad, 83135 Schechen (DE)
(74) Vertreter: Beckord & Niedlich

(56) Entgegenhaltungen:
- DE-A1- 19 540 147
- DE-A1- 19 711 464
- DE-A1- 19 849 391
- DE-C1- 19 608 956
- US-A- 5 411 363
- US-A1- 2008 019 819

## Beschreibung

Die Erfindung betrifft eine Kistenstapetvorrichtung nach dem Oberbegriff des Anspruchs 1, mit der Kisten übereinander gestapelt in einem Lager eingelagert und vorzugsweise zur Auslagerung wieder entstapelt werden können. Darüber hinaus betrifft die Erfindung ein Kistenstapellager mit einer solchen Kistenstapelanordnung sowie ein Verfahren zum Stapeln von Kisten und ein Verfahren zum Entstapeln von Kisten.

In vielen produzierenden Betrieben, aber auch in vielen logistischen Unternehmen und größeren Handelsunternehmen besteht ständig ein Bedarf, jederzeit eine relativ große Anzahl an normierten Kisten bereitzuhalten, in denen Waren zwischengelagert und/oder transportiert werden können. Zur Bereitstellung der benötigten Leerkisten muss nicht nur ausreichend Lagerraum zur Verfügung gestellt werden, sondern auch Einrichtungen, um die Kisten möglichst platzsparend und effektiv einlagern und wieder auslagern zu können. Insbesondere im Lebensmittelbereich, beispielsweise in Bäckerei- oder Fleischereibetrieben, ist zudem darauf zu achten, dass die Lagerung der Kisten unter hygienisch einwandfreien Bedingungen erfolgt. Da üblicherweise die Kisten direkt nach der Nutzung zunächst durch eine Waschanlage gefahren werden und die gereinigten Kisten eingelagert werden, um sie bei Bedarf jederzeit in verwendungsfähigem Zustand bereitzuhalten, müssen entsprechend hygienische Lagerbedingungen gegeben sein.

Das Dokument US 5 411 363 A offenbart eine Kistenstapelvorrichtung nach dem Oberbegriff des Anspruchs 1.

Eine besonders platzsparende Lösung ist die Lagerung der Kisten in Form von Stapeln, wobei vorteilhafterweise, um keine großen Höhen überwinden zu müssen, die Stapel von unten aufgebaut werden. Ein hierfür geeignetes Kistenstapellager wird beispielsweise in der DE 198 49 391 A1 beschrieben. Dieses Kistenstapellager weist ein Gestell auf, in dem mittels Fallklinken die Kistenstapel in Reihen und Spalten nebeneinander in einem Abstand über dem Boden gehalten werden. In einem freien Raum unter den gehaltenen Kistenstapeln ist eine Transporteinrichtung angeordnet. Diese Transporteinrichtung weist ein beispielsweise parallel zu den Kistenreihen verlaufendes Laufband auf und ist in Spaltenrichtung, d. h. quer zu den Reihen, unter den eingelagerten Kisten verfahrbar. Über ein weiteres Laufband kann dieser Transporteinrichtung eine Reihe von neuen Kisten zugeführt werden. Die Transporteinrichtung weist eine Hubeinrichtung auf, die das Laufband mit einer darauf angeordneten Kistenreihe zum Einlagern nach oben verfährt und von unten so in das Gestell einschiebt, dass diese Kistenreihe von den Fallklinken gehalten wird und die bereits darüber befindlichen, zuvor von den Fallklinken gehaltenen Kisten auf den neu eingelagerten Kisten gelagert sind. Auf diese Weise werden von unten die Kistenstapel vergrößert, bis eine maximale Höhe erreicht und das Lager voll ist. In umgekehrter Vorgehensweise können mit Hilfe der Transporteinrichtung die Kisten reihenweise wieder entnommen werden, wobei dann die Fallklinken zur Freigabe der jeweils untersten Kiste eines Stapels kurzzeitig geöffnet werden. Dieses Kistenlager funktioniert prinzipiell sehr gut, hat aber den Nachteil, dass das Gestell fest innerhalb des Lagerraums installiert ist und der gesamte Bodenbereich unterhalb des Gestells, in dem sich die Transporteinrichtung bewegt, für eine Reinigung relativ schwer zugänglich ist.

Es ist eine Aufgabe der vorliegenden Erfindung, eine Alternative zu dem genannten Kistenstapellager zu schaffen.

Diese Aufgabe wird durch eine Kistenstapelvorrichtung gemäß Patentanspruch 1, ein Kistenstapellager gemäß Patentanspruch 12 sowie durch ein Verfahren zum Stapeln von Kisten gemäß Patentanspruch 13 und ein Verfahren zum Entstapeln von Kisten gemäß Patentanspruch 15 gelöst.

Die erfindungsgemäße Kistenstapelvorrichtung weist zum einen ein Fahrgestell auf, welches, z. B. mittels einer geeigneten Verfahreinrichtung, entlang einer ersten horizontalen Bewegungsrichtung verfahrbar ist. Dabei kann das Fahrgestell so ausgebildet sein, dass es direkt auf dem Lagerboden fährt, indem die Verfahreinrichtung beispielsweise eine Anzahl von am Gestell angeordneten Rädern sowie ggf. einen motorischen Antrieb umfasst. Grundsätzlich ist es aber auch möglich, das Fahrgestell indirekt, beispielsweise auf Schienen oder dergleichen, auf einem Lagerboden des Lagerraums verstellbar bzw. verfahrbar anzuordnen.

Weiterhin weist die Kistenstapelvorrichtung eine mit dem Fahrgestell gekoppelte Vertikalstapeleinrichtung auf, die so ausgebildet ist, dass sie bei einer Kistenaufnahme jeweils zumindest eine Kiste von unten in einen Stapel aufnimmt und bei einer Kistenabgabe zumindest eine zuunterst in einem Stapel befindliche Kiste abgibt. Unter einer Vertikalstapeleinrichtung ist eine Einrichtung zu verstehen, mit der Kisten, wie eingangs erwähnt, übereinander gestapelt werden können, wobei hier die Aufnahme einer Kiste in den Stapel von unten bzw. die Abgabe aus dem Stapel nach unten erfolgt. Diese Vertikalstapeleinrichtung kann hierzu beispielsweise in einer vertikalen Bewegungsrichtung beweglich mit dem Fahrgestell gekoppelt sein, wobei die vertikale Bewegung gesteuert werden kann.

Schließlich weist die Kistenstapelvorrichtung eine Abstelleinrichtung auf, wobei die Abstelleinrichtung und/oder die Vertikalstapeleinrichtung in der ersten horizontalen Bewegungsrichtung relativ zueinander, zumindest von einer ersten Position, in der die Vertikalstapeleinrichtung zumindest teilweise oberhalb der Abstelleinrichtung angeordnet ist, in eine zweite Position verfahrbar sind, in der die Vertikalstapeleinrichtung und die Abstelleinrichtung so zueinander angeordnet sind, dass von der Vertikalstapeleinrichtung ein Kistenstapel neben der Abstelleinrichtung auf einem Lagerboden abgestellt oder vom Lagerboden aufgehoben werden kann. Hierzu können beispielsweise die Abstelleinrichtung und/oder die Vertikalstapeleinrichtung jeweils geeignete Antriebseinrichtungen aufweisen, um diese beiden Komponenten gegeneinander zu verfahren. Wichtig ist lediglich, dass in der zweiten Position die Vertikalstapeleinrichtung eine ausreichende Bodenfreiheit hat, so dass sie nach unten frei auf eine tiefere vertikale Position, d. h. auf eine Position, die tiefer ist als eine Abstelleinrichtung der Abstelleinrichtung, verfahrbar ist.

Eine derartige Kistenstapelvorrichtung erlaubt es, dass ein fertiger Kistenstapel, d. h. wenn der Stapel die gewünschte oder die maximale Höhe erreicht hat, anstelle in einer dauerhaften Halterung in einem Gestell nun direkt auf dem Lagerboden gelagert werden kann. Umgekehrt bedeutet dies, dass der Lagerboden in den Bereichen, an denen sich nicht gerade die Kistenstapelvorrichtung befindet oder bereits Kisten eingelagert sind, frei und daher leicht zugänglich ist. Dies erleichtert zum einen die Reinigung des Bereichs erheblich. Zum anderen besteht die Möglichkeit, den Lagerbereich bzw. den gesamten Lagerraum, wenn dieser vorübergehend nicht für die Lagerung von Kisten benötigt wird, für andere Zwecke zu benutzen, da ja das Fahrgestell mitsamt der Vertikalstapeleinrichtung und ggf. auch die Abstelleinrichtung an eine beispielsweise seitliche Position im Lagerraum verfahren werden kann. Insbesondere, wenn das Fahrgestell so aufgebaut ist, dass es direkt mit Rädern bzw. Rollen auf dem Lagerboden verfahrbar ist, ist im gesamten Bereich der Kistenstapelvorrichtung, in der sich das Fahrgestell üblicherweise bewegt, der Lagerboden komplett frei von konstruktiven Elementen, die eine Reinigung oder anderweitige Benutzung beeinträchtigen könnten.

Wie später noch erläutert wird, ist die Kistenstapelvorrichtung vorzugsweise so aufgebaut, dass mehrere Kistenstapel gleichzeitig (parallel) aufgestapelt bzw. entstapelt werden können. Hierzu weisen bevorzugt die Kistenstapelvorrichtung bzw. die Vertikalstapeleinrichtung und die Abstelleinrichtung mehrere Kistenstapelplätze auf.

Ein weiterer Vorteil dieser Kistenstapelvorrichtung besteht darin, dass am Gebäude selbst im oberen Bereich, beispielsweise am Mauerwerk oder an der Decke, keine konstruktiven statischen Maßnahmen erforderlich sind, anders als dies beispielsweise bei der Nutzung eines Brückenkrans erforderlich wäre. Es reicht aus, wenn ein Lagerraum zur Verfügung steht, dessen Boden die für die Kisten bzw. die Kistenstapelvorrichtung benötigte Tragkraft aufweist. Dies macht die Nutzung der Erfindung auch in bautechnisch einfach konstruierten Lagerräumen ohne großen technischen und finanziellen Zusatzaufwand möglich.

Ein erfindungsgemäßes Kistenstapellager benötigt also lediglich einen geeigneten Stapelboden sowie eine darauf angeordnete erfindungsgemäße Kistenstapelvorrichtung. Dabei ist es möglich, dass das Kistenstapellager mehrere der erfindungsgemäßen Kistenstapelvorrichtungen aufweist, beispielsweise um bestimmte Bereiche im Kistenstapellager getrennt bedienen zu können. Ebenso können die Kistenstapelvorrichtungen auch so im Kistenstapellager zueinander angeordnet sein und zusammenwirken, dass diese koordiniert einen gemeinsamen Bereich bearbeiten, beispielsweise, indem eine Kistenstapelvorrichtung Kisten einlagert und die andere Kistenstapelvorrichtung bei Bedarf Kisten wieder auslagert. Dabei können die Funktionen zwischen den Kistenstapelvorrichtungen je nach Anzahl und Anordnung der aktuell eingelagerten Kisten auch gewechselt werden. Insbesondere kann auf diese Weise erreicht werden, dass im Kistenstapellager zuerst aufgebaute Kistenstapel auch zuerst wieder abgebaut werden. Das Kistenstapellager kann zudem weiteres Zubehör wie eine Anzahl von Transportstrecken, insbesondere Transportbändern, Weichen, Vertikalförderern, Ausgängen und Eingängen, ggf. mit Schleusen, sowie Waschanlagen, Prüfeinrichtungen etc. aufweisen.

Mittels einer solchen Kistenstapelvorrichtung, welche wie oben beschrieben ein Fahrgestell mit einer Vertikalstapeleinrichtung sowie eine Abstelleinrichtung aufweist, können Kisten erfindungsgemäß in einem Verfahren mit folgenden Verfahrensschritten zur Einlagerung gestapelt werden:
a) Es wird zunächst, z. B. über eine Fördereinrichtung, auf die Abstelleinrichtung eine Anzahl von Kisten zugeführt. Je nach Anzahl von Kistenstapelplätzen der Vertikalstapeleinrichtung können dabei gleichzeitig mehrere Päckchen von Kisten (z. B. zwei Kisten übereinander) oder auch mehrere Einzelkisten zugeführt werden. Eine "Anzahl von Kistenstapeln" schließt dabei die Einlagerung nur eines Kistenstapels ein. Vorzugsweise werden aber aus Effektivitätsgründen gleichzeitig mehrere Kistenstapel gebildet bzw. aufgebaut.
b) Mittels der Vertikalstapeleinrichtung werden die Kisten von der Abstelleinrichtung angehoben.
c) Es wird auf die Abstelleinrichtung eine neue Anzahl von Kisten zugeführt.
d) Die von der Vertikalstapeleinrichtung gehaltenen Kisten werden dann mittels der Vertikalstapeleinrichtung auf den neuen Kisten abgestellt und die neuen Kisten mit den darüber befindlichen Kisten wieder angehoben.
e) Diese Schritte c) und d) werden schließlich wiederholt, bis eine bestimmte Stapelabbruchbedingung erreicht ist. Eine solche Stapelabbruchbedingung kann beispielsweise gegeben sein, wenn eine bestimmte Stapelhöhe erreicht ist oder keine einzulagernden Kisten mehr da sind.
f) Danach werden die Abstelleinrichtung und/oder die Vertikalstapeleinrichtung relativ gegeneinander in der ersten Bewegungsrichtung um zumindest eine erste bestimmte Weglänge, nämlich so weit, dass die Vertikalstapeleinrichtung frei nach unten fahren kann, verfahren.
g) Anschließend werden von der Vertikalstapeleinrichtung die Kistenstapel auf einem Lagerboden abgestellt.

Schließlich kann dann in einem weiteren Schritt h) das Fahrgestell um zumindest eine zweite bestimmte Weglänge in der ersten Bewegungsrichtung verfahren werden. Diese zweite bestimmte Weglänge kann beispielsweise ein "Kistenstapelrastermaß" sein, in dem die Kistenstapel in der ersten Bewegungsrichtung voneinander beabstandet auf dem Lagerboden nebeneinander abgestellt werden. Danach wird dann zum Aufbau eines weiteren Kistenstapels (bzw. einer weiteren Reihe von Kistenstapeln) das Verfahren ab Schritt a) wiederholt.

Ein erfindungsgemäßes Verfahren zum Entstapeln von Kisten mittels einer solchen Kistenstapelvorrichtung bei der Auslagerung der Kisten erfolgt in umgekehrter Weise. Das heißt, ein solches Verfahren weist folgende Verfahrensschritte auf:
a) Es werden mittels der Vertikalstapeleinrichtung die Kistenstapel jeweils untenseitig, d. h. an ihren untersten Kisten oder darunter, ergriffen und von einem Lagerboden aufgehoben. Hierzu kann das Fahrgestell beispielsweise entgegen der ersten Bewegungsrichtung um die zweite bestimmte Weglänge, z. B. das Kistenstapelrastermaß, verfahren werden, so dass die Vertikalstapeleinrichtung den bzw. die zu entstapelnden Kistenstapel ergreifen kann. Die Kistenstapel werden dann zumindest so weit angehoben, dass ihre Unterkante in einer Höhe oberhalb der Abstelleinrichtung ist. Analog zur Einlagerung kann auch bei der Auslagerung bevorzugt eine Anzahl von Kistenstapeln gleichzeitig entstapelt werden, auch wenn -je nach Aufbau der Kistenstapelvorrichtung und/oder Lagersituation (z. B. wie viele Kistenstapel aktuell in einer zu entstapelnden Reihe stehen) - die Entstapelung nur eines Kistenstapels von der Erfindung umfasst wird.
b) Es werden dann die Abstelleinrichtung und/oder die Vertikalstapeleinrichtung relativ gegeneinander um zumindest eine erste bestimmte Weglänge entgegen der ersten Bewegungsrichtung verfahren, so dass sich die Abstelleinrichtung nun wieder unter der Vertikalstapeleinrichtung befindet.
c) Von der Vertikalstapeleinrichtung wird die Anzahl von Kistenstapeln auf der Abstelleinrichtung abgestellt.
d) Mittels der Vertikalstapeleinrichtung wird dann jeweils ein Teilstapel der Anzahl von Kistenstapeln angehoben, so dass zumindest eine Kiste des jeweiligen Kistenstapels auf der Abstelleinrichtung verbleibt.
e) Die auf der Abstelleinrichtung verbleibende jeweilige Kiste der Kistenstapel wird wegbefördert, z. B. auf eine Fördereinrichtung befördert, mit der die Kisten aus dem Lager abtransportiert werden können.
f) Die Schritte c) bis e) werden so lange wiederholt, bis eine Entstapel-Abbruchbedingung erreicht ist. Diese Entstapel-Abbruchbedingung ist beispielsweise dann erreicht, wenn keine Kisten mehr aus dem Lager angefordert werden oder der Stapel aufgebraucht ist.

Sofern der oder die Kistenstapel vollkommen entstapelt sind und weitere Kisten angefordert werden, kann dann das Verfahren wieder mit dem Schritt a) beginnen und eine nächste noch im Lager befindliche Anzahl von Kistenstapeln untenseitig ergriffen und in der erfindungsgemäßen Weise entstapelt und ausgelagert werden.

Es wird also zum Stapeln von Kisten und/oder zum Entstapeln von Kisten jeweils eine erfindungsgemäße Kistenstapelvorrichtung verwendet.

Die weiteren Ansprüche und die nachfolgende Beschreibung enthalten besonders vorteilhafte Ausgestaltungen und Weiterbildungen der Erfindung, wobei insbesondere die Ansprüche einer Kategorie auch analog zu den Ansprüchen einer der anderen Kategorien weitergebildet sein können. Zudem wird explizit darauf hingewiesen, dass nur in einem bestimmten Ausführungsbeispiel dargestellte Elemente oder Merkmale auch in Verbindung mit anderen dargestellten und/oder beschriebenen Ausführungsbeispielen zur Erreichung einer vorteilhaften Wirkung kombiniert werden können, auch wenn diese Kombination nicht explizit dargestellt ist.

Besonders bevorzugt ist die Abstelleinrichtung mit einer Antriebseinrichtung zur Bewegung der Abstelleinrichtung gegenüber der Vertikalstapeleinrichtung in der ersten Bewegungsrichtung versehen. Ist die Antriebseinrichtung in ihrer Position gegenüber der Vertikalstapeleinrichtung verfahrbar, so ist es nicht erforderlich, die Vertikalstapeleinrichtung selber in einer horizontalen Richtung zu bewegen, um die Abstelleinrichtung und die Vertikalstapeleinrichtung in die zweite Position zueinander zu bringen, in der die Vertikalstapeleinrichtung den Kistenstapel neben der Abstelleinrichtung auf einem Lagerboden abstellen kann. Dies hat insbesondere den Vorteil, dass ein Kistenstapel, der sich aktuell in der Vertikalstapeleinrichtung befindet bzw. von dieser gehalten wird, nicht horizontal bewegt werden muss, bevor er auf dem Stapelboden abgestellt wird. Es können also keine in horizontaler Richtung wirkenden Fliehkräfte auf den Kistenstapel wirken, so dass die Kisten sicherer übereinander stehen.

Besonders bevorzugt ist hierzu die Abstelleinrichtung in der ersten Bewegungsrichtung am Fahrgestell beweglich gelagert. Unter einer Lagerung der Abstelleinrichtung am Fahrgestell ist dabei auch eine Lagerung im Fahrgestell zu verstehen. Beispielsweise kann die Abstelleinrichtung hierzu über Rollen, Schienen und/oder andere Führungselemente mit dem Fahrgestell, bevorzugt im unteren Teil des Fahrgestells, gekoppelt sein. Dies hat den Vorteil, dass die Abstelleinrichtung bei einer Bewegung des Fahrgestells in der ersten Bewegungsrichtung, beispielsweise nach einem fertigen Aufstapeln von Kistenstapeln und Abstellen der Kistenstapel auf dem Lagerboden, zur Aufstellung der nächsten Kistenstapel automatisch mitbewegt wird. Prinzipiell wäre es aber theoretisch auch möglich, dass die Abstelleinrichtung und das Fahrgestell mit der Vertikalstapeleinrichtung nur in geeigneter Weise synchron zueinander gesteuert, aber im Übrigen völlig unabhängig voneinander auf dem Lagerboden oder einer geeigneten Unterkonstruktion wie Schienen oder dergleichen verfahren werden. Bei der Antriebseinrichtung zur Bewegung der Abstelleinrichtung am Fahrgestell kann es sich beispielsweise um Antriebsrollen, um Hubzylinder, einen in horizontaler Richtung wirkenden Scherenmechanismus (ähnlich einer Hubschere) oder dergleichen handeln.

Vorzugsweise weist die Abstelleinrichtung einen daran oder darin angeordneten bzw. integrierten Querförderer auf, der ausgebildet ist, um aus- oder einzulagernde Kisten in einer zweiten Richtung quer zur ersten Richtung zu transportieren. Hierbei handelt es sich vorzugsweise um einen Horizontalförderer, beispielsweise um ein Förderband eine Förderkette oder dergleichen. Dieser Querförderer kann zur Zuführung und Abführung von Kisten unter die Vertikalstapeleinrichtung dienen.

Wie bereits oben erwähnt, weist die Vertikalstapeleinrichtung ganz besonders bevorzugt mehrere quer zur ersten Bewegungsrichtung nebeneinander angeordnete Kistenstapelplätze auf. Das heißt, die Vertikalstapeleinrichtung ist so ausgebildet, dass nebeneinander in der quer zur ersten Bewegungsrichtung verlaufenden Richtung mehrere Stapel von Kisten gebildet bzw. gehalten werden können. In diesem Fall ist die Abstelleinrichtung, insbesondere der Querförderer, dann so ausgebildet bzw. so lang, dass sie bzw. er sich in der ersten Position der Abstelleinrichtung und Vertikalstapeleinrichtung zueinander durchgehend unter den Kistenstapelplätzen der Vertikalstapeleinrichtung erstreckt. Diese Konstruktion hat den Vorteil, dass gleichzeitig bzw. parallel mehrere Kistenstapel aufgebaut werden können und jeweils in quer zur ersten Bewegungsrichtung verlaufenden Reihen nebeneinander positioniert werden können. Das Fahrgestell kann dann in der ersten Bewegungsrichtung schrittweise von einer Reihe zur nächsten verfahren werden, um so insgesamt die Kistenstapel in einer Matrixform in Reihen und Spalten nebeneinander aufzustellen. In umgekehrter Weise können gleichzeitig die Kistenstapel reihenweise zur Auslagerung wieder aufgenommen und entstapelt werden. Hierdurch wird eine sehr hohe Arbeitsgeschwindigkeit der Kistenstapelvorrichtung erreicht.

Um Kisten zur Auslagerung zum Fahrgestell, insbesondere zur Querfördereinrichtung, zu transportieren und umgekehrt bei einer Auslagerung auch Kisten vom Fahrgestell weg zu transportieren, weist die Kistenstapelvorrichtung besonders bevorzugt eine entlang der ersten Bewegungsrichtung neben dem Fahrgestell verlaufende Längsfördereinrichtung auf. Hierbei kann es sich vorzugsweise um eine gradlinige Förderstrecke mit einem Förderband, einer Förderkette oder dergleichen handeln. Alternativ könnte das Fahrgestell auch im Kistenlager an eine Abholstation verfahren werden, um eine Anzahl von Kistenstapeln dort aufzubauen und dann an einer gewünschten Stelle im Lager abzustellen. Die Nutzung einer Längsfördereinrichtung ist aber besonders effektiv und hat den Vorteil, dass das Fahrgestell nicht mit darin gehaltenen Kistenstapeln verfahren werden muss.

Besonders bevorzugt kann das Fahrgestell über eine Führungseinrichtung mit einer Seite der Längsfördereinrichtung bzw. der Förderstrecke gekoppelt sein, um auf einfache Weise sicherzustellen, dass das Fahrgestell in der ersten Bewegungsrichtung von einer Position zur nächsten Position parallel zur Längsfördereinrichtung verfährt. Beispielsweise kann die Längsfördereinrichtung mit einer Schiene oder dergleichen gekoppelt sein, über die das Fahrgestell an einer Seite mit der Längsfördereinrichtung gekoppelt ist.

Insbesondere bei größeren Lagern ist es auch möglich, dass eine Längsfördereinrichtung, beispielsweise mittig zwischen zwei Lagerflächen verläuft und beidseitig der Längsfördereinrichtung jeweils Fahrgestelle mit Abstelleinrichtungen, insbesondere Querförderern, und Vertikalstapeleinrichtung angeordnet sind.

Bei einer besonders bevorzugten Ausführungsform weist die Kistenstapelvorrichtung eine Stoppereinrichtung auf, um eine auf der Längsfördereinrichtung neben dem Fahrgestell in der ersten Bewegungsrichtung verlaufende Kiste an einer relativ zum Fahrgestell vorgegebenen Position zu stoppen. Vorzugsweise ist diese Stoppereinrichtung am Fahrgestell angeordnet, da sich ja die aktuelle Position des Fahrgestells an der Längsfördereinrichtung verändern kann. Besonders bevorzugt weist die Kistenstapelvorrichtung mehrere, beispielsweise mit dem Fahrgestell gekoppelte, Stoppereinrichtungen auf. Eine dieser Stoppereinrichtungen wird vorzugsweise so angeordnet, dass eine davon angehaltene Kiste sich an einer Übergabestelle zur Übergabe einer Kiste von der Längsfördereinrichtung zur Abstelleinrichtung, insbesondere zum Querförderer des Fahrgestells, befindet. Eine weitere Stoppereinrichtung befindet sich vorzugsweise in einem ausreichenden Abstand in Laufrichtung der einlaufenden Kisten vor dieser Übergabeposition, um dafür zu sorgen, dass eine nachkommende Kiste nicht auf eine aktuell an das Fahrgestell bzw. an die Abstelleinrichtung zu übergebende Kiste aufläuft.

Bei einer bevorzugten Variante ist die Stoppereinrichtung, welche die Kisten an der Übergabestelle festhält, so ausgebildet, dass sie von oben in den Laufweg der Kiste hineinragt. Dadurch ist es besonders einfach möglich, durch Ausgestaltung von Stoppern mit unterschiedlichen Längen oder durch Anfahren unterschiedlicher Stopperpositionen Kisten mit unterschiedlicher Höhe zu selektieren, beispielsweise nur höhere Kisten an einer bestimmten Stelle zu stoppen und niedrigere Kisten durchzulassen, um sie dann beispielsweise an anderer Stelle einzulagern.

Für die Übergabe der Kisten zwischen der Längsfördereinrichtung und der Abstelleinrichtung, insbesondere dem Querförderer, des Fahrgestells weist die Kistenstapelvorrichtung vorzugsweise eine Kistenübergabeeinrichtung auf. Dabei kann die Kistenübergabeeinrichtung so ausgebildet sein, dass mit ihrer Hilfe sowohl die Kisten von der Längsfördereinrichtung zur Abstelleinrichtung übergeben werden als auch umgekehrt Kisten bei der Auslagerung von der Abstelleinrichtung auf die Längsfördereinrichtung übergeben werden. Prinzipiell ist es aber auch möglich, unterschiedliche Formen der Übergabe beim Ein- und Auslagern vorzusehen.

Beispielsweise kann die Kistenübergabeeinrichtung bei einer bevorzugten Variante eine Einzugseinheit umfassen, die die Kisten vom Längsförderer auf die Abstelleinrichtung, insbesondere den Querförderer, zieht. Bei einer besonders einfachen und sicheren Variante handelt es sich hierbei um eine Einzugseinheit mit einer Fallklinke, die von der Abstelleinrichtung aus in horizontaler Richtung unter die Kisten auf der Längsfördereinrichtung gefahren wird, dabei entgegen der Schwerkraft herunterdrückt wird und anschließend innerhalb einer Kiste, die vorzugsweise mit der Öffnung nach unten auf dem Förderband steht, nach oben kippt und gesperrt ist. Beim Zurückfahren der Einzugseinheit wird die Kiste dann von der Klinke auf die Abstelleinrichtung mitgenommen. Zur Rückübergabe von Kisten von der Abstelleinrichtung auf die Längsfördereinrichtung kann beispielsweise die Abstelleinrichtung, insbesondere der Querförderer, zumindest einseitig höhergestellt werden, so dass diese Fallklinke der Einzugseinheit dann überlaufen wird, um die Kisten auf die Längsfördereinrichtung auszuschleusen.

Sofern, wie in der bevorzugten Ausgestaltung der Vertikalstapeleinrichtung vorgesehen, die Vertikalstapeleinrichtung mehrere Kistenstapelplätze nebeneinander entlang der Abstelleinrichtung aufweist und somit auf der Abstelleinrichtung gleichzeitig mehrere Kisten positioniert werden, befinden sich vorzugsweise im Bereich der Abstelleinrichtung, bevorzugt am Querförderer, mehrere Stopper, die dafür sorgen, dass bei einem Transportieren der Kisten entlang der Abstelleinrichtung bzw. auf dem Querförderer diese automatisch an den Kistenstapelplätzen positioniert bzw. im richtigen Abstand zueinander angehalten werden. Besonders bevorzugt kann eine zusätzliche Positionskontrolle durch Positions- und/oder Abstandssensoren, beispielsweise mit Licht- oder IR-Strahlungssensoren, erfolgen. Um für einen sicheren Transport der Kisten entlang der Abstelleinrichtung bzw. auf dem Querförderer zu sorgen, ist dieser vorzugsweise mit Zentrierleisten versehen, die zumindest während der Bewegung der Kisten auf der Abstelleinrichtung bzw. dem Querförderer in Funktion treten, d. h. vorzugsweise hochgeklappt sind.

Die Vertikalstapeleinrichtung weist bevorzugt an einem vertikal verfahrbaren Stapelhaltegestell beweglich gelagerte Halteklinken auf, die in einer Halteposition zum Halten einer Kiste, nämlich der untersten Kiste eines Kistenstapels, in einem Abstand über dem Boden der Kiste an zwei gegenüberliegenden Seite an der Kiste angreifen. Diese Halteklinken sind vorzugsweise gesteuert, z. B. motorisch verstellbar, so dass sie von einer Freigabeposition, in der die Halteklinken nicht an einer Kiste angreifen, in die Halteposition herausfahrbar sind.

Besonders bevorzugt weist das Stapelhaltegestell jeweils an zwei gegenüberliegenden Seiten neben einem Kistenstapelplatz, an dem ein Kistenstapel aufgebaut oder abgebaut werden soll, Klinkenhalter auf, an denen jeweils die Halteklinken beweglich gelagert sind, so dass sie in der Halteposition in den Kistenstapelplatz hineinragen und an einer Seite an der Kiste angreifen, beispielsweise unter einen außenseitig von der Kiste überstehenden Kragen der Kiste greifen. In einer bevorzugten Variante, in der das Stapelhaltegestell mehrere Kistenstapelplätze aufweist, ragen einige "mittlere" Klinkenhalter zwischen die Kistenstapelplätze hinein. Vorzugsweise sind diese mittleren Klinkenhalter so ausgebildet, dass jeweils auf beiden Seiten (zu beiden Kistenstapelplätzen hin) Halteklinken ausfahren, so dass rechts und links daneben eine Kiste ergriffen werden kann.

Die Klinkenhalter sind zumindest in einem unteren Bereich des Stapelhaltegestells als Trennwände ausgebildet, welche die Kistenstapelplätze voneinander abgrenzen bzw. einen Kistenstapelplatz seitlich beschränken. Besonders bevorzugt sind die Klinkenhalterungen bzw. die Trennwände, welche die Klinkenhalter bilden, nach vorne und nach unten hin konisch zulaufend ausgebildet. Dies erleichtert eine Zentrierung der Kisten zwischen den Klinkenhaltern am jeweiligen Kistenstapelplatz und somit die Aufnahme einer Kiste bzw. eines kompletten Stapels durch die Vertikalstapeleinrichtung.

Eine Halteklinke ist am Klinkenhalter vorzugsweise derart beweglich gelagert, dass sie sich in der Halteposition entgegen einer in Richtung der Schwerkraft auf das äußere, an der Kiste angreifende Ende wirkenden Kraft an einem Widerlager abstützt. Dies hat den Vorteil, dass motorisch keine große Kraft zum Halten der Kistenstapel erforderlich ist, sondern dass es ausreicht, wenn das Widerlager stabil genug ist.

Die Klinkenhalter bzw. die daran angeordneten Halteklinken sind vorzugsweise so ausgebildet, dass der Abstand der Oberkante der ausgefahrenen Halteklinken zum untersten Punkt des Stapelhaltegestells, beispielsweise zu einer Unterkante der Klinkenhalter, maximal 7 cm, vorzugsweise maximal 6,5 cm beträgt. Dadurch ist gewährleistet, dass sich die Halteklinken in der untersten Position der Vertikalstapeleinrichtung, in der die Kisten auf dem Lagerboden abgestellt werden, maximal in dem besagten Abstand von 7 cm, vorzugsweise maximal 6,5 cm, über dem Boden befinden, und somit auch relativ flache Kisten, wie sie beispielsweise derzeit in Bäckereibetrieben eingesetzt werden, gut augenommen werden können.

Um sicherzustellen, dass die Kistenstapel nicht eine vorgeschriebene Maximalhöhe überschreiten, kann die Kistenstapelvorrichtung eine Höhenkontrolleinrichtung aufweisen. Diese ist vorzugsweise direkt am Fahrgestell angeordnet. In einer besonders einfachen Variante kann eine Höhenkontrolleinrichtung mit Hilfe eines Seils realisiert werden, welches an Stangen mit der gewünschten maximalen Stapelhöhe über das Stapelhaltegestell geführt wird und mit einem Seilzugdetektor gekoppelt ist.

Insbesondere im Lebensmittelbereich sind, wie bereits erwähnt, besondere Hygienebedingungen für die Kisten zu beachten. Auch, wenn der Lagerboden nach den Hygienevorschriften regelmäßig gereinigt wird, ist es dennoch von Vorteil, wenn die später zum Transport oder zur Lagerung der Lebensmittel verwendeten Kisten nicht unmittelbar auf den Boden gestellt werden, sondern zunächst noch Bodenabstandshalter unter die Stapel gebracht werden, so dass sich die unterste, später zum Gebrauch bestimmte Kiste auf diesen Bodenabstandshaltern befindet. Bei diesen Bodenabstandshaltern bzw. Bodenauflagen kann es sich beispielsweise um Bodenkisten handeln, die prinzipiell in der gleichen Form ausgebildet sein können wie die ein- und auszulagernden, zum Transport und zur Lagerung der Lebensmittel vorgesehenen Kisten. Diese Bodenkisten müssen nur in geeigneter Weise markiert, beispielsweise in einer anderen Farbe eingefärbt sein, um sie als solche Bodenauflagen zu kennzeichnen.

Bei dem erfindungsgemäßen Verfahren wird in diesem Fall bei der Einlagerung der Kisten dafür gesorgt, dass bei Erreichen der Stapelabbruchbedingung, beispielsweise bei Erreichen einer maximalen Stapelhöhe bzw. wenn keine Kisten mehr einzulagern sind und die fertigen Stapel abgestellt werden sollen, zunächst noch der Abstelleinrichtung eine Anzahl von Bodenabstandshaltern, insbesondere Bodenkisten, zugeführt werden. Beispielsweise kann ein Bodenabstandshalter in gleicher Weise wie eine Kiste unter die Vertikalstapeleinrichtung an den Kistenstapelplatz transportiert werden. Es können dann mittels der Vertikalstapeleinrichtung die von der Vertikalstapeleinrichtung gehaltenen Kisten auf den Bodenabstandshaltern abgestellt werden und dann die Bodenabstandshalter mit den darüber befindlichen Kisten angehoben werden, bevor die Abstelleinrichtung bzw. die Vertikalstapeleinrichtung um zumindest die erste bestimmte Weglänge in der Bewegungsrichtung relativ gegeneinander verfahren werden und die Vertikalstapeleinrichtung die Kistenstapel mitsamt den Bodenabstandshaltern auf dem Lagerboden abstellt. Die Kistenstapelvorrichtung weist hierzu vorzugsweise eine Bodenabstandshalter-Lagereinrichtung auf, um der Vertikalstapeleinrichtung zu einem definierten Zeitpunkt die Bodenabstandshalter zuzuführen. Beispielsweise kann ein in gleicher Weise wie das Kistenstapellager aufgebautes, lediglich kleiner dimensioniertes Kistenstapellager mit Bodenkisten vorgesehen sein, wobei dort ebenfalls eine (kleinere) erfindungsgemäße Kistenstapelvorrichtung verwendet wird, um zum passenden Zeitpunkt Bodenkisten zu entnehmen oder nicht gebrauchte Bodenkisten wieder einzulagern.

Die Kistenstapelvorrichtung weist zur Durchführung der bereits beschriebenen Verfahren vorzugsweise eine Steuereinrichtung auf, welche direkt oder indirekt mit den Antriebseinrichtungen des Fahrgestells, der Vertikalstapeleinrichtung, der Abstelleinrichtung, insbesondere dem Querförderer, sowie ggf. einer Fördereinrichtung, insbesondere dem Längsförderer, verbunden ist. Diese Steuereinrichtung steuert die genannten Komponenten zum Einlagern von Kisten in der bereits oben beschriebenen Weise mit den Schritten a) bis g) und/oder zum Auslagern von Kisten gemäß den Schritten a) bis f) an.

Die Erfindung wird im Folgenden unter Hinweis auf die beigefügten Figuren anhand eines besonders bevorzugten Ausführungsbeispiels einer Kistenstapelvorrichtung noch einmal näher erläutert. Hieraus ergeben sich auch weitere Einzelheiten und Vorteile der Erfindung. Es zeigen:
Figur 1 eine perspektivische Ansicht auf ein Ausführungsbeispiel einer erfindungsgemäßen Kistenstapelvorrichtung im leeren Zustand mit einer Abstelleinrichtung in einer vorderen Position,
Figur 2 eine perspektivische Ansicht auf die Kistenstapelvorrichtung wie in Figur 1, jedoch teilweise aufgebrochen zur besseren Darstellung der Bewegungsmechanik der Abstelleinrichtung,
Figur 3 eine weitere perspektivische Ansicht auf die Kistenstapelvorrichtung wie in Figur 2, jedoch mit der Abstelleinrichtung in einer hinteren Position,
Figur 4 eine weitere perspektivische Ansicht auf die Kistenstapelvorrichtung wie in Figur 1 während einer Befüllung mit Kisten,
Figuren 5 bis 12 eine Sequenz von schematischen Darstellungen des unteren Bereichs der Kistenstapelvorrichtung mit der Abstelleinrichtung mit dem Querförderer sowie der Längsfördereinrichtung zur Verdeutlichung des Vorgangs der Einlagerung von Kisten,
Figuren 13 und 14 schematische Schnittdarstellungen eines mittleren Klinkenhalters mit darin angeordneten Halteklinken in zwei verschiedenen Positionen,
Figuren 15 bis 18 eine Sequenz von weiteren schematischen Darstellungen des unteren Bereichs der Kistenstapelvorrichtung mit der Abstelleinrichtung mit dem Querförderer sowie der Längsfördereinrichtung zur Verdeutlichung des Vorgangs der Einlagerung von Kisten,
Figur 19 eine perspektivische Ansicht auf die Kistenstapelvorrichtung wie in den Figuren 1 bis 4 in voll beladenem Zustand,
Figuren 20 bis 22 eine Sequenz von schematischen Schnittdarstellungen in einer parallel zur Längsfördereinrichtung verlaufenden Schnittrichtung, zur Verdeutlichung des Abstellen von Kistenstapeln auf dem Lagerboden,
Figur 23 eine Darstellung wie in den Figuren 5 bis 12, nun jedoch bei der Auslagerung von Kisten vom Querförderer auf die Längsfördereinrichtung,
Figur 24 eine schematische Draufsicht auf die Kistenstapelvorrichtung während einer Befüllung mit Kisten sowie eine Anzahl von bereits auf dem Lagerboden abgestellten Kistenstapeln,
Figur 25 eine schematische Darstellung eines Kistenstapellagers von oben mit einer Kistenstapelvorrichtung wie in Figur 24,
Figur 26 eine schematische Darstellung eines Kistenstapellagers von oben mit einer Kistenstapelvorrichtung wie in Figur 25, jedoch nun in einer Variante mit zwei Vertikalstapeleinrichtungen 30.

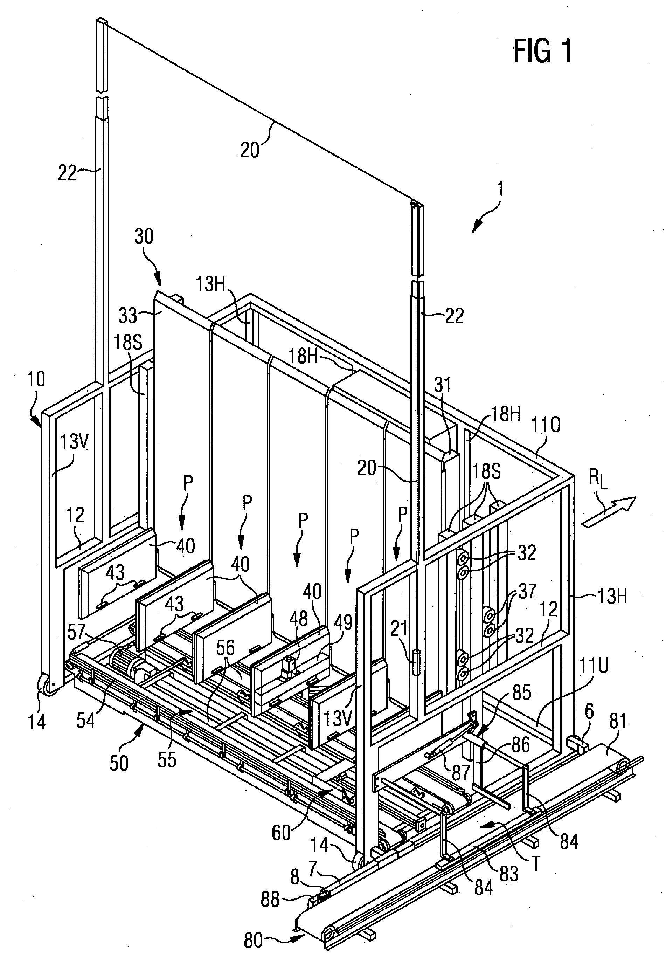

Die in den Figuren dargestellte bevorzugte Kistenstapelvorrichtung 1 weist erfindungsgemäß ein Fahrgestell 10 sowie eine damit gekoppelte Vertikalstapeleinrichtung 30 auf. Diese Vertikalstapeleinrichtung 30 lässt sich innerhalb des Fahrgestells 10 in einer vertikalen Richtung zwischen unterschiedlichen Höhenpositionen hin und her bewegen und wird hierzu in geeigneter Weise von einer Steuereinrichtung (in Figur 1 nicht dargestellt) gesteuert. Das Fahrgestell 10 ist, wie später noch genauer beschrieben wird, in einer ersten Bewegungsrichtung R_{L}, im Folgenden auch Längsrichtung R_{L} genannt, auf einem Lagerboden 102 verfahrbar.

Neben dem Fahrgestell 10 ist eine horizontale Längsfördereinrichtung 80 mit einem in Längsrichtung R_{L} verlaufenden Förderband 81 angeordnet, über welches einzulagernde Kisten K zum Fahrgestell 10 befördert werden können bzw. auszulagernde Kisten K vom Fahrgestell 10 wegbefördert werden können.

Innerhalb des Fahrgestells 10 ist unterhalb der Vertikalstapeleinrichtung 30 eine Abstelleinrichtung 50 beweglich gelagert. Dabei kann die Abstelleinrichtung 50 in der Längsrichtung R_{L} von einer ersten Position I, in der die Vertikalstapeleinrichtung 30 sich weitgehend oberhalb der Abstelleinrichtung 50 befindet, in eine zweite Position II verfahren werden, in der sich die Abstelleinrichtung 50 in Längsrichtung R_{L} gesehen hinter der Vertikalstapeleinrichtung 30 befindet, so dass diese frei bis nach unten bis auf oder knapp über den Lagerboden 102 verfahren werden kann. Die Abstelleinrichtung 50 ist hier mit einem Querförderer 55 mit zwei in einer quer zur Längsrichtung R_{L} verlaufenden Querrichtung R_{Q} parallel laufenden, über einen Antrieb 57 angetriebenen Bändern 56 ausgestattet.

In dem dargestellten Ausführungsbeispiel sind das Fahrgestell 10, die Vertikalstapeleinrichtung 30 und die Abstelleinrichtung 50 so ausgestaltet, dass in Querrichtung R_{Q} nebeneinander fünf Kistenstapelplätze P zur Verfügung gestellt werden, um parallel, wie noch später detailliert erläutert wird, gleichzeitig mehrere Kistenstapel S aufbauen bzw. entstapeln zu können. Es wird an dieser Stelle darauf hingewiesen, dass die Anzahl der Kistenstapelplätze aber im Prinzip beliebig ist, d. h. die Kistenstapelvorrichtung 1 sowohl weniger Kistenstapelplätze P (im Extremfall nur einen) als auch erheblich mehr Kistenstapelplätze P aufweisen kann. Ebenso ist an dieser Stelle zu erwähnen, dass auch andere Details der Kistenstapelvorrichtung nicht unbedingt in der im Rahmen der Figuren erläuterten exakten Ausbildung vorliegen müssen, sondern auch Abwandlungen der verschiedenen Merkmale möglich sind. Beispielsweise muss die Abstelleinrichtung 50, wie dies im Folgenden erläutert wird, nicht zwingend innerhalb des Fahrgestells 10 gelagert sein, sondern könnte ebenso auch frei beweglich auf dem Lagerboden 102 ohne eine mechanische Kopplung mit dem Fahrgestell 10 realisiert werden und lediglich beispielsweise auf elektronische Weise synchronisiert zum Fahrgestell 10 verfahren werden.

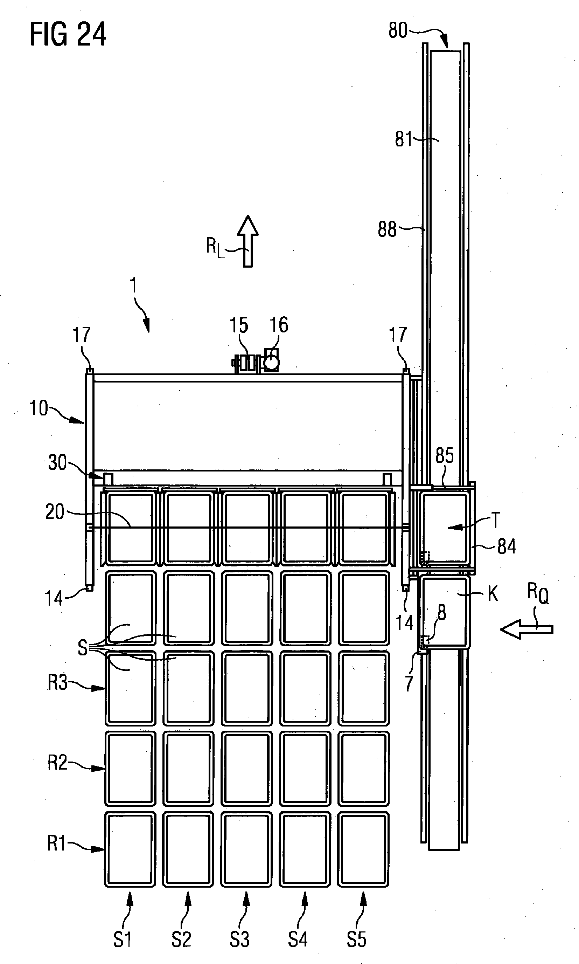

In Figur 24 ist die prinzipielle Einlagerweise der Kisten K mit Hilfe der erfindungsgemäßen Kistenstapelvorrichtung 1 dargestellt. Wie hier zu sehen ist, werden nacheinander mehrere Kistenstapel S jeweils parallel in einer Reihe aufgebaut, dann abgestellt und eine neue Reihe aufgebaut. Insgesamt stehen dann die Kistenstapel S auf einem Lagerboden 102 in einer matrixförmigen Anordnung mit Reihen R1, R2, R3, ... und mehreren Spalten S1, S2, S3, S4, S5, wobei die Anzahl der Spalten S1, S2, S3, S4, S5 der Anzahl der Kistenstapelplätze P der Vertikalstapeleinrichtung 30 entspricht.

Wie insbesondere aus den Figuren 1 bis 4 gut zu erkennen ist, ist das Fahrgestell 10 hier als stabiles, aus Rohrrahmenteilen zusammengebautes, insgesamt U-förmiges, nach vorne hin offenes Gestell aufgebaut. Als Vorderseite des Fahrgestells 10 wird in diesem Zusammenhang die Seite angesehen, die nach einem Aufstapeln von Kistenstapeln S und Abstellen der Kistenstapel S auf dem Lagerboden 102 zu den fertig aufgestapelten Kistenstapeln S weist (siehe z. B. Figur 24). Die Rückseite des Fahrgestells 10 ist die von dieser Vorderseite weg weisende Seite, an der der Rahmen des Fahrgestells 10 geschlossen ist. Beim Einlagern von Kisten K bewegt sich das Fahrgestell 10 demgemäß mit der Rückseite schrittweise voran in der ersten Bewegungsrichtung R_{L} bzw. Längsrichtung R_{L} von einer Position zur nächsten Position, um jeweils Kisten K aufzunehmen, zu Kistenstapeln S hochzustapeln und dann die Kistenstapel S an dieser Position auf dem Lagerboden abzustellen. Die Kisten werden bei dem in den Figuren dargestellten Ausführungsbeispiel in der bevorzugten Position kopfüber, d. h. mit dem Boden nach oben und der Öffnung nach unten, eingelagert.

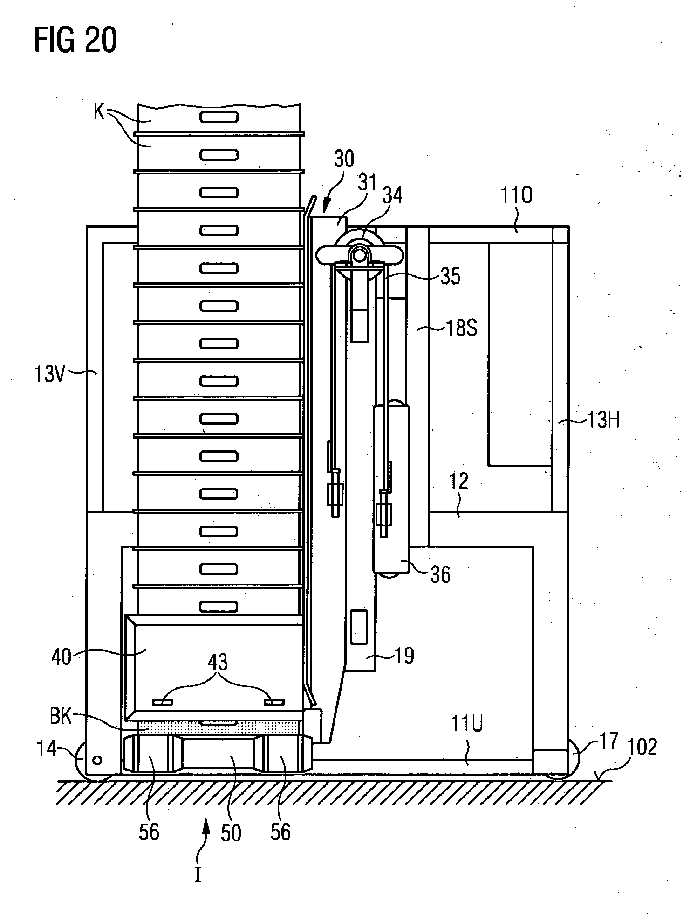

Das Fahrgestell 10 weist hier insbesondere einen oberen U-Rahmen 11O und einen unten, knapp oberhalb des Bodens, angeordneten unteren U-Rahmen 11U auf, die an allen vier Ecken, nämlich vorne durch vordere Stützen 13V und hinten durch hintere Stützen 13H, miteinander verbunden sind. An den parallel zur Längsrichtung R_{L} verlaufenden Seiten des Fahrgestells 10 sind die Stützen 13V, 13H jeweils zur Stabilisierung durch Querträger 12 untereinander verbunden. Zur weiteren Stabilisierung sind der obere U-Rahmen 11O und der untere U-Rahmen 11U an der Rückseite des Fahrgestells 10 durch zusätzliche vertikale Stützen 18H untereinander verbunden. Außerdem sind die beiden Seitenteile bzw. U-Schenkel des Gestells ungefähr im mittleren Bereich (in Längsrichtung R_{L} gesehen) durch einen aus mehreren Rohrrahmenteilen bestehenden Halterahmen 19 untereinander verbunden, an dem auch die Vertikalstapeleinrichtung 30 gehalten wird (siehe Figuren 20 bis 22).

Am unteren U-Rahmen 11 U befindet sich an den vorderen Ecken jeweils ein Rad 14, welches hier in die unteren Enden der vorderen Stützen 13V integriert ist. Außerdem weist das Fahrgestell am unteren U-Rahmen 11U an der Hinterseite in der Mitte ein bewegliches Zwillingsrad 15 auf, welches über einen Motor 16 angetrieben wird. Dieses Zwillingsrad 15 ist lenkbar, so dass durch entsprechende Steuerung dafür gesorgt werden kann, dass das gesamte Fahrgestell sich exakt in der Längsrichtung R_{L} bewegt. Ebenso können auch die vorderen Räder 14 jeweils separat motorisch angetrieben werden, um für einen Parallellauf zu sorgen.

Zusätzlich kann das Fahrgestell 10 mit Hilfe von Führungshaken 6 bzw. einem Führungsblock 7, welcher am Fahrgestell 10 befestigt ist und so ausgebildet ist, dass er hinter eine Führungsschiene 88 an der Längsfördereinrichtung 80 eingreift, parallel zur Längsfördereinrichtung 80 geführt werden. Dabei können beispielsweise an den Führungshaken 6 bzw. im Führungsblock 7 auch elektronische Sensoren eingebaut sein, um basierend auf Messwerten dieser Sensoren das Rad 15 passend anzusteuern. Andere Sensoren zur Abstandmessung können alternativ oder zusätzlich eingesetzt werden.

Zur weiteren Sicherheit sind an den hinteren unteren Ecken des Fahrgestells 10 noch Stützräder 17 angeordnet, die im Normalbetrieb den Boden nicht berühren, sondern knapp oberhalb des Bodens angeordnet sind und nur zur Unterstützung im Falle eines leichten Ankippens des Fahrgestells dienen. Bei einer Variante des Fahrgestells sind diese Stützräder 17 auch höhenverstellbar, so dass sie immer dann auf den Boden aufgesetzt werden, wenn gerade die Vertikalstapeleinrichtung 30 in Betrieb ist und Kistenstapel S aufstapelt oder entstapelt, und die ansonsten bei einem Verfahren des Fahrgestells 10 im unbeladenen Zustand in einem oberen Zustand sind. Alternativ können auch Stützfüße ausgefahren werden, um für einen stabilen Stand während der Einlagerung und Auslagerung von Kisten K zu sorgen. Dies hängt davon ab, wie hoch die Kistenstapel S aufgebaut werden sollen und wie viele Kistenstapelplätze P gleichzeitig bedient werden.

Die Vertikalstapeleinrichtung 30 weist ein flaches, hochkant ausgerichtetes, stabiles Stapelhaltegestell 31 auf, welches beispielsweise auch als Rohrrahmen ausgebildet sein kann. An der Vorderseite zu den Kistenstapelplätzen P hin befindet sich eine Wand 33, beispielsweise aus dünnem Blech, an der im Betrieb die aufzustapelnden Kisten K bzw. Kistenstapel S anliegen. Außerdem erstrecken sich vom Stapelhaltegestell 31 zur Vorderseite des Fahrgestells 10 hin zwischen die Kistenstapelplätze P bzw. außenseitig neben den äußersten Kistenstapelplätzen P jeweils Klinkenhalter 40, die als eine Form von Trennwänden zwischen den Kistenstapelplätzen P ausgebildet sind und an denen, wie später noch genau erläutert wird, die Halteklinken 43 zum Halten der Kisten beweglich gelagert sind.

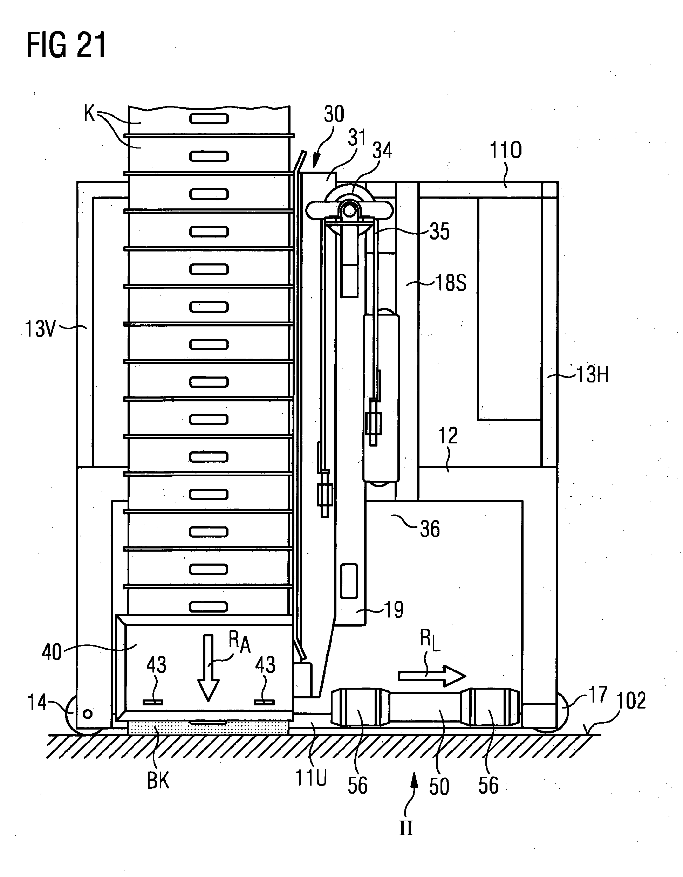

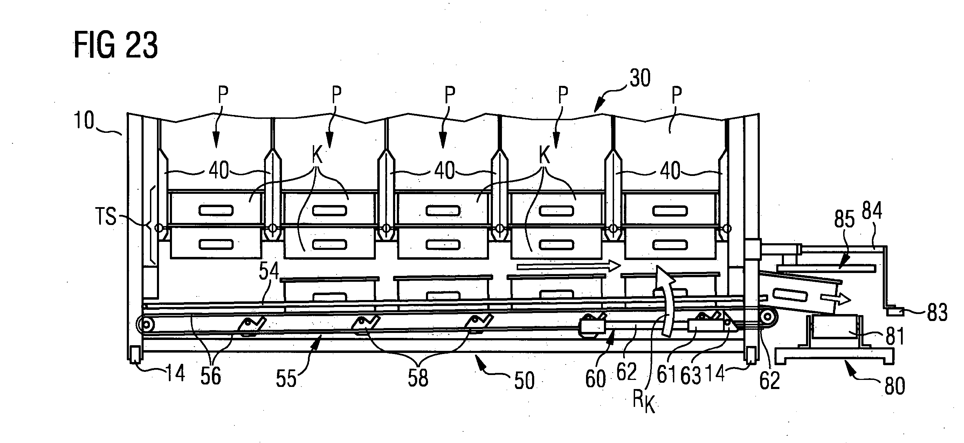

Das Stapelhaltegestell 31 wird jeweils rechts und links über Rollen 32 zwischen zwei vertikalen Streben 18S, die sich zwischen dem oberen U-Rahmen 11O des Fahrgestells 10 und den Querstreben 12 auf jeder Seite des Fahrgestells 10 erstrecken, in vertikaler Richtung beweglich geführt. Die Antriebsmechanik zur vertikalen Bewegung des Stapelhaltegestells 31 ist in den Figuren 21 bis 23 schematisch dargestellt. Wie hier zu sehen ist, sind in einem oberen Bereich an dem erwähnten Halterahmen 19, der im mittleren Bereich unmittelbar hinter dem Stapelhaltegestell 31 im U-förmigen Haltegestell 10 befestigt ist und dieses zusätzlich stabilisiert, Umlenkrollen 34 angeordnet. Vorzugsweise befinden sich am Halterahmen 19 für die Vertikalstapeleinrichtung 30 parallel zwei solcher Umlenkrollen 34 jeweils in einem Abstand nach innen von der rechten und linken Seite des Fahrgestells 10 aus. Zumindest eine, vorzugsweise beide, der Umlenkrollen 34 ist/sind angetrieben. Bei in Querrichtung R_{Q} längeren Vertikalstapeleinrichtungen mit mehr als fünf Kistenstapelplätzen P können auch mehr als zwei parallele (angetriebene) Umlenkrollen 34 zum Einsatz kommen. Über diese Umlenkrollen 34 läuft jeweils ein Zugband 35, welches einerseits am beweglichen Stapelhaltegestell 31 und andererseits an einem Gegengewicht 36 befestigt ist, wobei die Masse des Gegengewichts 36 in etwa der Gesamtmasse der leeren Vertikalstapeleinrichtung 30 ohne Kisten entspricht. Dadurch ist dafür gesorgt, dass über einen Antrieb der Umlenkrollen 34 lediglich noch die Arbeit zum Anheben der Kistenstapel S aufgebracht werden muss. Bei dem Zugband 35 handelt es sich bevorzugt um ein Zahnband. Alternativ können auch Seile oder Ketten zum Einsatz kommen.

Zur Stabilisierung der vertikalen Bewegung des Gegengewichts 36 weist dieses zu den beiden Seiten des Fahrgestells 10 hin weisende Verlängerungen auf (nicht dargestellt), an denen endseitig jeweils Rollen 37 (siehe Figur 1) angeordnet sind. Diese Rollen 37 werden ebenfalls in vertikaler Richtung zwischen zwei horizontalen Streben 18S geführt, die sich zwischen dem oberen U-Rahmen 10O und den Querstreben 12 an den Seiten des Fahrgestells 10 erstrecken.

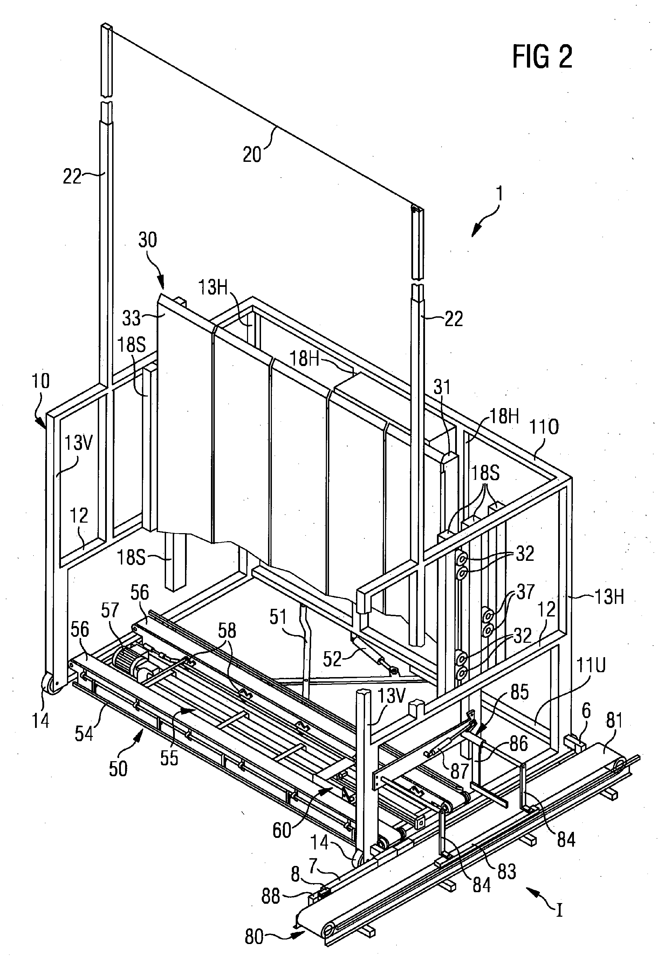

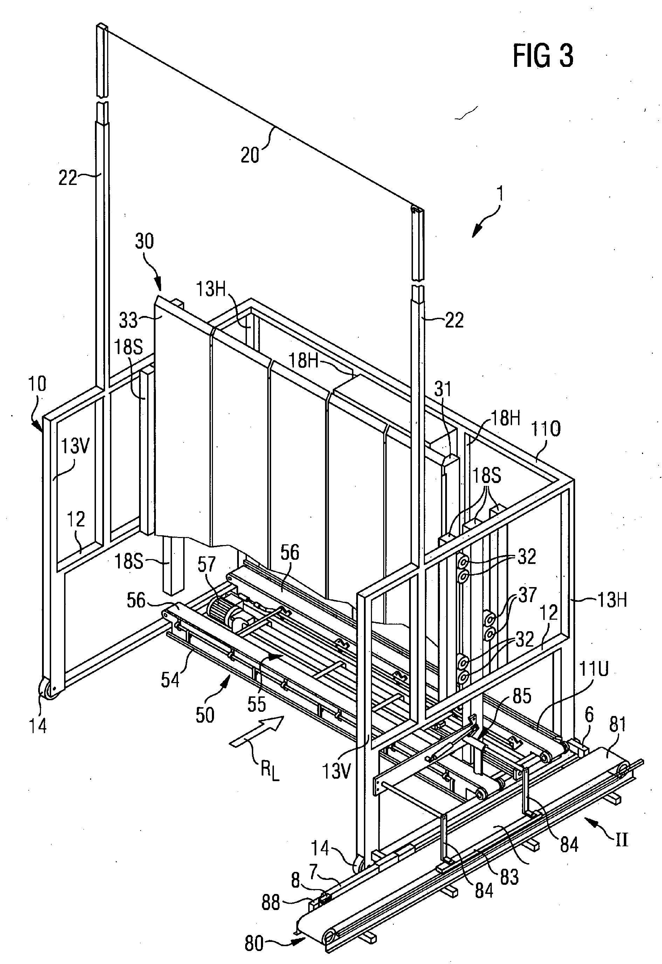

Wie besonders gut in den Figuren 2 und 3 zu erkennen ist, erstreckt sich die Abstelleinrichtung 50 mit dem Querförderer 55 über die komplette in Querrichtung R_{Q} verlaufende Breite des Fahrgestells 10. Endseitig ist dabei die Abstelleinrichtung 50 über Gleitlager 53 auf den beiden seitlich verlaufenden U-Schenkeln des unteren U-Rahmens 11 U des Fahrgestells 10 gelagert und kann so von der vorderen Position I, wie in Figur 2 dargestellt, in die hintere Position II, wie in Figur 3 dargestellt, verfahren werden. Die Verstellung zwischen den Positionen I und II der Abstelleinrichtung 50 innerhalb des Fahrgestells 10 erfolgt mit einem liegend an der hinteren Strebe, d. h. am U-Grund des U-Rahmens 11 U einerseits und an der Abstelleinrichtung 50 andererseits angeordneten Scherenmechanismus 51, der über einen Hubzylinder 52 angetrieben verstellt werden kann. Dieser Scherenmechanismus 51 arbeitet ähnlich einer Hubschere und sorgt so für eine einfache Positionsverstellung der Abstelleinrichtung 50 innerhalb des Fahrgestells 10. Wie in den Figuren 1 bis 3 deutlich zu sehen ist, weist der Querförderer 55 der Abstelleinrichtung 50 hier zwei parallel laufende Transportbänder 56 auf, die von einem Motor 57 parallel synchron angetrieben werden, so dass jeweils Kisten mit ihren Seitenkanten auf diesen Bändern 56 in der Querrichtung R_{Q} auf der Abstelleinrichtung 50 verfahren werden können.

Die Funktionsweise der Kistenstapelvorrichtung beim Einlagern von Kisten K erfolgt in der Art, dass über das Förderband 81 des Längsförderers 80 Kisten K zum Fahrgestell 10 befördert werden. Im Fahrgestell 10 befindet sich die Abstelleinrichtung 50 bei der Einlagerung der Kisten K in der vorderen Position I. Außenseitig ist am Fahrgestell 10 in Längsrichtung R_{L} gesehen hinter dieser vorderen Position I eine Stoppereinrichtung 85 angeordnet. Diese Stoppereinrichtung 85 weist einen Arm 86 (welcher bei diesem Ausführungsbeispiel hier gewinkelt ist) auf, der von oben in den Weg einer auf dem Laufband 81 transportierten Kiste K einschwenkbar ist. Die Steuerung der Position des Arms 86 erfolgt mittels eines pneumatischen Zylinders 87. Ist der Arm 86 der Stoppereinrichtung 85 nach unten gefahren, so stößt eine einlaufende Kiste K an diesem Arm 86 an und wird auf dem Förderband 81 direkt vor der sich in der vorderen Position I befindlichen Abstelleinrichtung 50 angehalten. Diese Position auf dem Laufband 81 vor dem Fahrgestell 10, die sich permanent mit dem Fahrgestell mitbewegt, d. h. die relativ zum Fahrgestell 10 feststehend ist, aber sich auf dem Laufband 81 vor dem Fahrgestell 10 mit der aktuellen Position des Fahrgestells 10 ändert, wird im Folgenden als Übergabeposition bzw. Transferposition T bezeichnet. An dieser Transferposition T wird mit Hilfe einer noch später erläuterten Übergabeeinrichtung 60 dafür gesorgt, dass die einzulagernden Kisten K von der Längsfördereinrichtung 80 auf die Abstelleinrichtung 50 übergeben werden.

Der Aufbau der Stoppereinrichtung 85 an der Übergabeposition T mit einem von oben einschwenkbaren Arm 86 hat den Vorteil, dass damit auch eine Selektion unterschiedlicher Kisten nach ihrer Höhe erfolgen kann, so dass beispielsweise nur Kisten K mit einer bestimmten Mindesthöhe angehalten und an die Abstelleinrichtung 50 des Fahrgestells 10 übergeben werden, wogegen niedrigere Kisten K durchgelassen und beispielsweise an anderer Stelle eingelagert werden.

Durch eine zusätzliche Stoppereinrichtung 8 (im folgenden Vorstopper 8 genannt), die hier am Führungsblock 7 des Fahrgestells 10 angeordnet ist, wird dafür gesorgt, dass eine auf dem Förderband 81 nachlaufende Kiste bei Bedarf in einem passenden Abstand vor der Transferposition T gestoppt wird, so dass sie nicht auf eine aktuell zu übergebende Kiste aufläuft. Dieser Vorstopper 8 kann beispielsweise durch einen von unten in die Kiste K einzufahrenden Stift oder dergleichen realisiert werden. Diese Positionierung einer nachlaufenden Kiste K ist besonders gut in Figur 24 von oben zu erkennen.

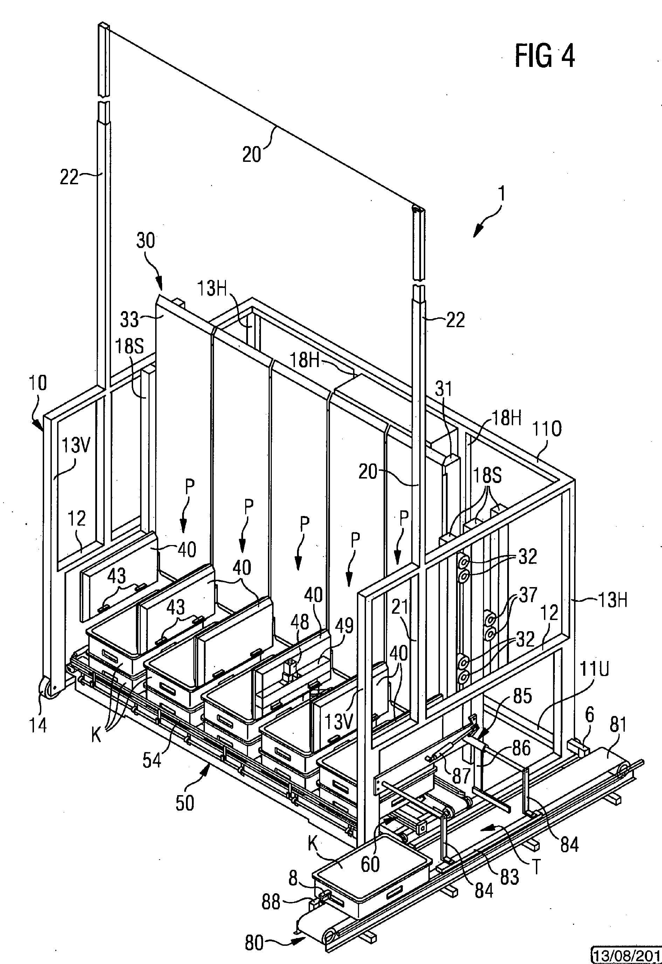

In Figur 4 ist die Kistenstapelvorrichtung 1 in einem Zustand gezeigt, in dem bereits Kistenstapel mit jeweils zwei Kisten auf der Abstelleinrichtung 50 aufgestapelt wurden und gerade eine weitere Kiste K zur Einlagerung antransportiert wird.

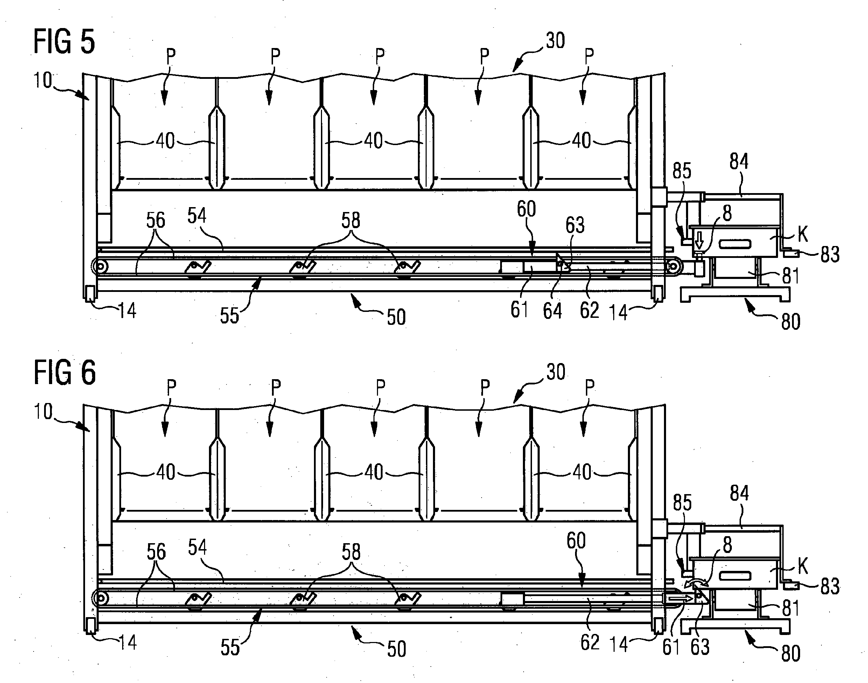

Anhand der Figuren 5 bis 18 wird nachfolgend der Prozess der Übergabe von Kisten K von der Längsfördereinrichtung 80 auf den Querförderer 55 sowie die Bildung der Kistenstapel S mit Hilfe der Vertikalstapeleinrichtung 30 genauer erläutert. Dabei wird in Figur 5 mit der leeren Kistenstapelvorrichtung 1 begonnen. Eine erste Kiste K wird hier bei heruntergefahrenem Vorstopper 8 (angedeutet durch den Pfeil nach unten) bis zur hinteren Stoppereinrichtung 85 durchgelassen und dort an der Transferposition T passend vor dem Fahrgestell 10 bzw. dem Querförderer 55 der Abstelleinrichtung 50 auf dem Laufband 81 gestoppt. Während der Übergabe von Kisten auf die Laufbänder 56 des Querförderers 55 befindet sich das Stapelhaltegestell 31 der Vertikalstapeleinrichtung 30 in einer oberen Position.

In der Abstelleinrichtung 50 ist unterhalb der Oberkante der Bänder 56 des Querförderers 55 eine Übergabeeinrichtung 60 in Form einer Einzugseinheit angeordnet, die die Kisten K in das Fahrgestell 10 auf die Abstelleinrichtung 50 zieht. Die Übergabeeinrichtung 60 weist hierzu einen Laufwagen 61 auf, der an einer sich längs zwischen den Laufbändern 56 erstreckenden Laufschiene 62 parallel zu den Laufbändern 56 unterhalb der Oberkante der Laufbänder 56 in Richtung auf die Längsfördereinrichtung 80 hin motorisch angetrieben verfahrbar ist. Dieser Laufwagen 61 weist einen liegenden U-förmigen, zur Längsfördereinrichtung 80 hin offenen Rahmen auf. An den freien zur Längsfördereinrichtung 80 hin weisenden Enden der U-Arme des Laufwagens 61 befindet sich jeweils ein Haken 63, welcher an jeweils an einem Drehpunkt 64 drehbar gelagert ist (siehe z.B. Figuren 1 und 5). Die Drehpunkte der Haken 63 befinden sich auf einer gemeinsamen Drehachse. Diese Haken 63 sind dreiecksförmig jeweils so ausgebildet, dass sie in einer Normalposition, die sie unter Schwerkrafteinfluss von selber einnehmen, mit einer Spitze oberhalb der Oberkante der Laufbänder 56 nach oben herausragen. Dabei sind die Haken 63 so ausgebildet und mit einer Dreieckspitze so angeordnet, dass sie in Richtung der Längsfördereinrichtung 80 eine Auflaufkante und auf der von der Längsfördereinrichtung 80 wegweisenden Seite eine gerade Kante aufweisen. Der Laufwagen 61 ist so weit seitlich über das Fahrgestell 10 hinaus neben das Laufband 81 der Längsfördereinrichtung 80 herausfahrbar, dass die Haken 62 von unten in eine auf dem Laufband 81 in der Übergabeposition T stehende Kiste eingreifen. Da die Auflaufkante der Haken 63 in Richtung der Längsfördereinrichtung 80 weist, können sie um den Drehpunkt 64 nach unten gedrückt werden, wenn sie an die Seitenkante der Kisten K anstoßen. Sobald die Haken 63 unter der Seitenkante der Kiste K hindurchgeschoben sind, klappen sie aufgrund der Schwerkraft wieder nach oben. Ein Zurückschwenken in eine Position unterhalb der Oberkante des Laufbands 56 ist dann nicht mehr möglich (siehe Figur 6). Dadurch wird beim Zurückfahren des Laufwagens 61 die zu übergebende Kiste K mit auf die Laufbänder 56 des Querförderers 55 der Abstelleinrichtung 50 hinübergezogen.

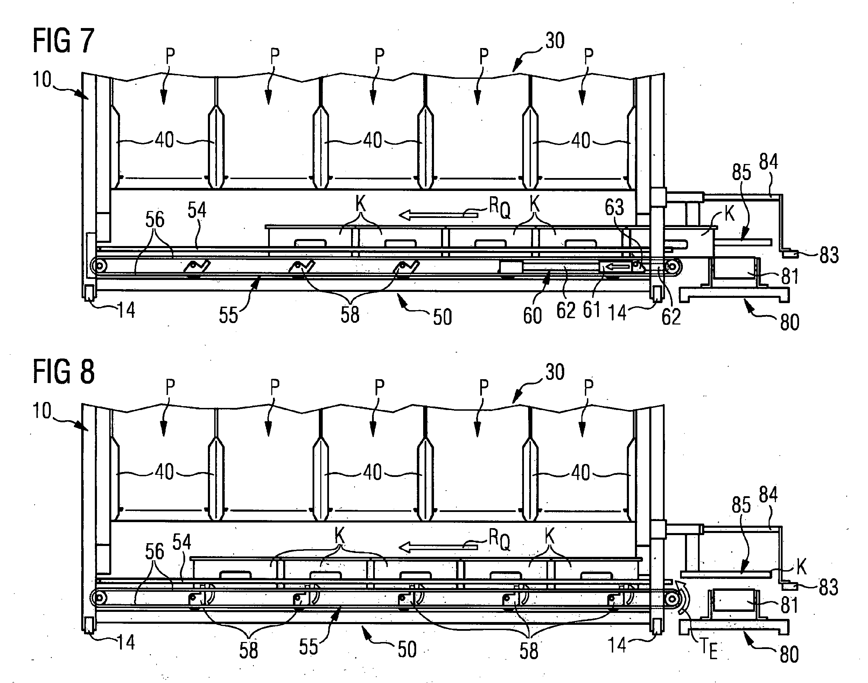

Anschließend kann eine neue Kiste K in die Übergabeposition T auf dem Laufband 81 der Längsfördereinrichtung 80 verfahren werden, indem der erste Vorstopper 88 wieder nach unten bewegt wird und diese Kiste K dann von der Stoppereinrichtung 85 in der Transferposition T angehalten wird. Diese neue Kiste K wird dann mit Hilfe der Übergabeeinrichtung 60 in gleicher Weise auf die Laufbänder 56 gezogen wie die erste Kiste K, wobei die erste Kiste K mit der nachkommenden Kiste K automatisch auf den Laufbändern 56 weiter in Richtung der von der Längsfördereinrichtung 80 weg weisenden Seite des Fahrgestells 10 (wie in Figur 7 dargestellt nach links) geschoben wird. Um dafür zu sorgen, dass die Kisten K dabei möglichst exakt entlang der Laufbänder 56 verschoben werden, befinden sich parallel auf beiden Längsseiten der Abstelleinrichtung 50 Zentrierleisten 54, wobei zumindest die vordere Zentrierleiste 54, ggf. aber auch beide Zentrierleisten 54, herunterklappbar ist/sind.

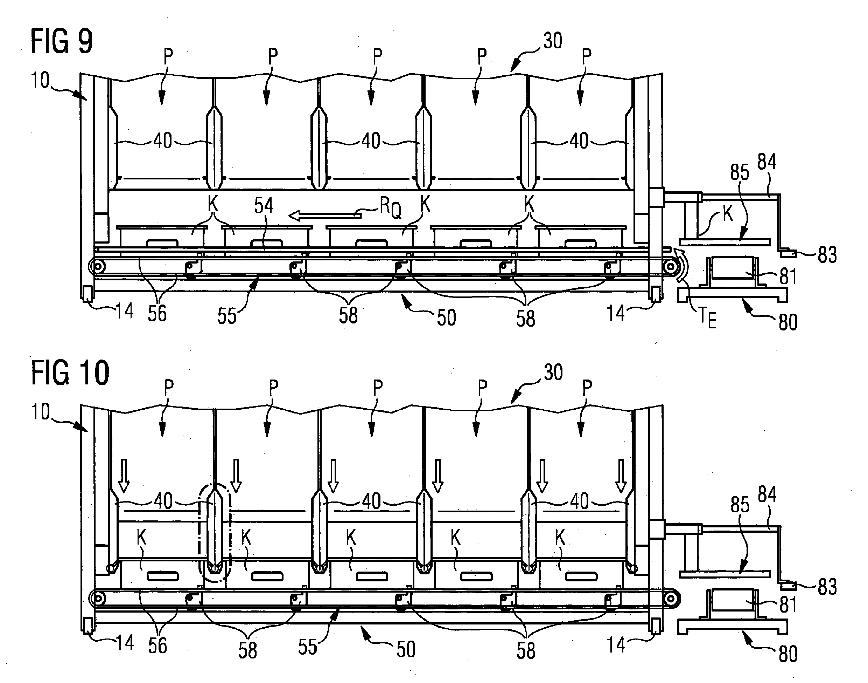

Wie in Figur 7 gezeigt, werden auf diese Weise hintereinander eine Anzahl von Kisten K entsprechend der Anzahl der Kistenstapelplätze P, d. h. hier fünf Kisten K, auf die Laufbänder 56 des Querförderers 55 gezogen. Anschließend muss eine exakte Positionierung der Kisten K an den Kistenstapelplätzen P erfolgen. Hierzu werden die Laufbänder 56 in einer Laufrichtung T_{E} (siehe Figur 8) in Betrieb gesetzt, so dass sich die Kisten K auf der Abstelleinrichtung 50 weiter in Querrichtung R_{Q} zu der von der Längsfördereinrichtung 80 weg weisenden Seite des Fahrgestells 10 bewegen. Gleichzeitig wird synchron an jedem Kistenstapelplatz P ein Stopperelement 58 betätigt. Die Stopperelemente 58 sind hier in Form von schwenkbar gelagerten Fingern ausgebildet, welche von unten über die obere Kante der Laufbänder 56 hochgeschwenkt werden können (vgl. Figuren 7 und 8). Die synchrone Bewegung dieser Stopperelemente 56 erfolgt über einen hydraulischen Zylinder, der über ein Gestänge mit allen Stopperelementen 58 gekoppelt ist. Diese Stopperelemente 58 greifen von unten jeweils in eine Kiste K ein und sorgen dafür, dass die Kisten K beim weiteren Verfahren der Laufbänder 56 in der Laufrichtung T_{E} exakt an den Kistenstapelplätzen P anhalten (siehe Figur 9). Zusätzlich kann dann eine Kontrolle der richtigen Position der Kisten K, insbesondere des Abstands der Kisten K zueinander, mit Hilfe von Positionsdetektoren erfolgen.

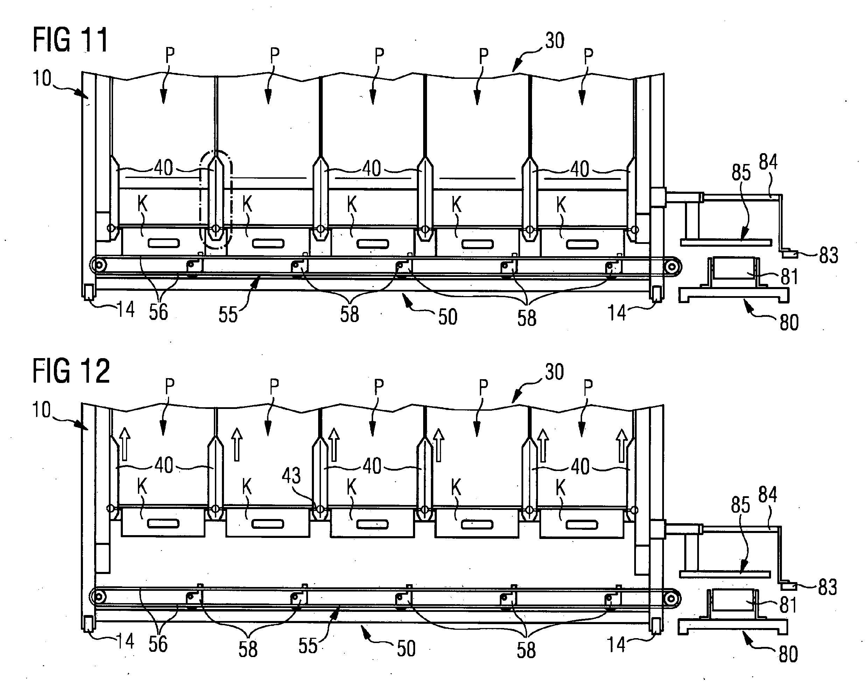

Anschließend wird das Stapelhaltegestell 31 der Vertikalstapeleinrichtung 30 in eine untere Position verfahren, wobei die Klinkenhalter 40 mit den darin befindlichen Halteklinken 43 zwischen die Kisten K bzw. außenseitig jeweils neben die äußersten Kisten K heruntergefahren werden (siehe Figur 10). Die Klinkenhalter 40 sind dabei mit jeweils flachen, einer Art Trennwand zwischen den Kisten bildenden Gehäusen 41 versehen, wobei der obere, der vordere und untere Rand 41 R dieses Gehäuses 41 konisch zulaufend ausgebildet ist. Dies hat den Vorteil, dass beim Herunterfahren der Klinkenhalter 40 die Kisten K an den Kistenstapelplätzen P automatisch noch einmal zentriert werden. Beim Herunterfahren unter den oberen Rand der aufzunehmenden Kisten K (bzw. den unteren Rand der ja kopfüber stehenden Kisten K) werden jeweils die Halteklinken 43, welche sich von den Klinkenhaltern 40 aus von beiden Seiten aus in die Kistenstapelplätze P hinein erstrecken, eingefahren. Sobald sich die Halteklinken 43 unterhalb des Randes der einzulagernden Kisten K befinden, werden die Halteklinken 43 ausgefahren, so dass sie jeweils rechts und links an den Kistenstapelplätzen P unter den oberen Rand der Kisten eingreifen können (siehe Figur 11). Wird dann das Stapelhaltegestell 31 der Vertikalstapeleinrichtung 30 wieder nach oben verfahren, werden die Kisten K durch die Halteklinken 43 beidseitig an der Vertikalstapeleinrichtung 30 gehalten und mit nach oben verfahren (siehe Figur 12), so dass der Platz auf der Abstelleinrichtung 50 zur Einlagerung von weiteren Kisten K wieder frei ist.

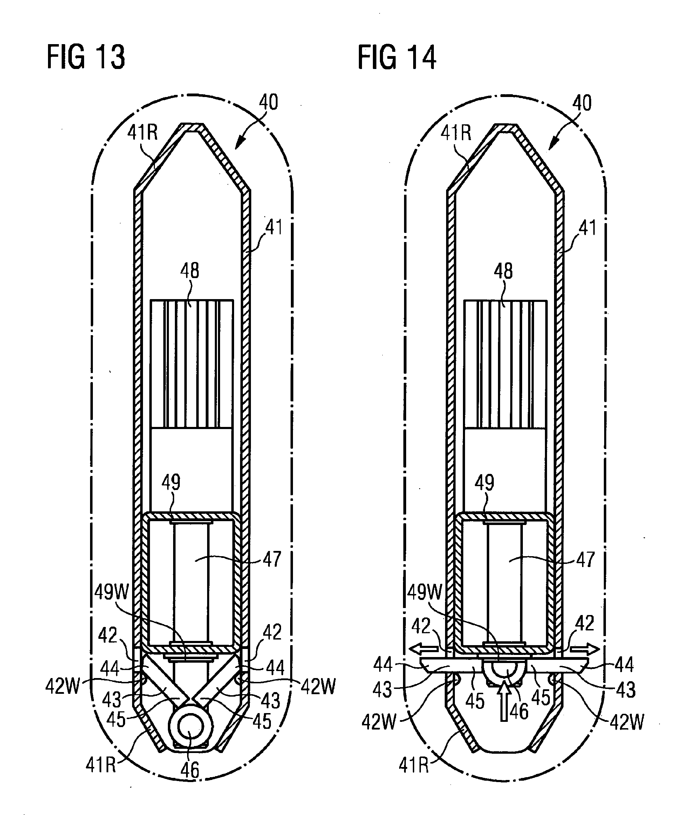

Der Aufbau und die Funktionsweise der Klinkenhalter 40 mit den Halteklinken 43 wird nun noch einmal unter Zuhilfenahme der Figur 1 sowie der Detaildarstellung in den Figuren 13 und 14 des in der Figur 11 markierten Klinkenhalters 40 näher erläutert. Figur 13 stellt dabei den Zustand bei eingefahrenen Halteklinken 43 und Figur 14 den Zustand bei ausgefahrenen Halteklinken 43 dar.

In dem Gehäuse 41 jedes Klinkenhalters 40 befindet sich eine stabile Traverse 49. Im dargestellten Ausführungsbeispiel wird die Traverse 49 von einem Vierkantrohr gebildet. Diese Traverse 49 ist am Stapelhaltegestell 31 befestigt, beispielsweise am unteren Ende des Stapelhaltegestells 31 mit diesem fest verschweißt oder verschraubt.

Innerhalb des Gehäuses 41 befindet sich außerdem ein Antriebsmotor 48 bzw. ein pneumatischer oder hydraulischer Antriebszylinder, der hier oberhalb der Traverse 49 in etwa in der Mitte des Klinkenhalters 40 angeordnet ist. Unterhalb der Traverse 49 befinden sich seitlich vorne und hinten im Gehäuse 41 jeweils schlitzartige Klinkenöffnungen 42, durch die die Halteklinken 43 im ausgefahrenen Zustand aus dem Gehäuse 41 herausragen (siehe Figur 14). Unterhalb der Öffnungen 42 befinden sich im Gehäuse 41 Auflager 42W, auf denen die Halteklinken 43 beim Herausfahren aus den Klinkenöffnungen 42 aufliegen. Die Halteklinken 43 bestehen hier aus dicken Blechstücken 43, die sich in Längsrichtung der Traversen 49 erstrecken. Sie sind in dieser Längsrichtung ca. 6 cm breit und quer dazu ca. 8 mm dick. Die Länge der Halteklinken 43 (in horizontaler Richtung im ausgefahrenen Zustand quer zur Traverse gemessen) beträgt ca. 6 cm. Im ausgefahrenen Zustand ragen die Halteklinken 43 ca. 3 cm aus dem Gehäuse heraus. Das lichte Maß zwischen zwei benachbarten Klinkenhaltern 40 beträgt ca. 41 cm.

An ihrem außenseitigen Eingriffsende 44 sind die Halteklinken 43 nach unten hin abgeschrägt, so dass sie beim Herausfahren leichter unter die Kistenränder greifen können und im eingefahrenen Zustand vollständig im Gehäuse 41 hinter der Klinkenöffnung 42 liegen. In dem dargestellten Ausführungsbeispiel befinden sich in den mittleren Klinkenhaltern 40 auf jeder Seite jeweils zwei Halteklinken 43, eine im vorderen Bereich und eine im hinteren Bereich, näher am Stapelhaltegestell 31. Die äußeren Klinkenhalter 40 weisen sinnvollerweise nur auf einer Seite, nämlich auf der Seite, die zum jeweiligen äußeren Kistenstapelplatz P hin weist, entsprechende Halteklinken 43 auf. Es ist klar, dass die Klinkenhalter aber auch auf jeder Seite mehr als zwei Halteklinken oder nur eine durchgehende längere Halteklinke aufweisen können. Alternativ können auch Stifte als Halteklinken verwendet werden.

Alle Halteklinken 43 innerhalb eines Klinkenhalters 40 sind mit einer Drehachse 46 gekoppelt, die wiederum mit einem Stempel 47 verbunden ist, der mit dem Antrieb 48, beispielsweise einem hydraulischen Zylinder, gekoppelt ist. Ist der Stempel 47 nach unten ausgefahren, so sind die Halteklinken 43 wie in Figur 13 nach oben geklappt und befinden sich innerhalb des Gehäuses 41 des Klinkenhalters 40. Wird nun, wie in Figur 14 dargestellt, der Stempel 47 nach oben gezogen, bewegt sich auch die Drehachse 46 nach oben unter die Traverse 49, und die beweglich an der Drehachse 46 befestigten Halteklinken 43 schwenken durch die Klinkenöffnungen 42 nach außen. Sie liegen dann auf den Auflagen 42W an den Klinkenöffnungen 42 stabil auf. Eine Kraft, die außen nach unten auf die Eingriffsenden 44 der Halteklinken 43 drückt, wirkt dann so, dass die Halteklinken 43 um diese Auflagepunkte 42W weiter nach unten verschwenkt würden. Jedoch stößt bei der dargestellten bevorzugten Konstruktion in dieser Position gleichzeitig das innenseitige Ende 45 der Halteklinken 43, welches an der Drehachse 46 montiert ist, von unten an der Traverse 49 an, deren Unterkante somit ein Widerlager 49W bietet. Dies hat den Vorteil, dass die belasteten Halteklinken 43 rein mechanisch aufgrund ihrer Lagerung im ausgefahrenen Zustand gehalten werden und keinerlei motorische, insbesondere hydraulische Kraft nötig ist, um die Kistenstapel S in der Vertikalstapeleinrichtung 30 zu halten.

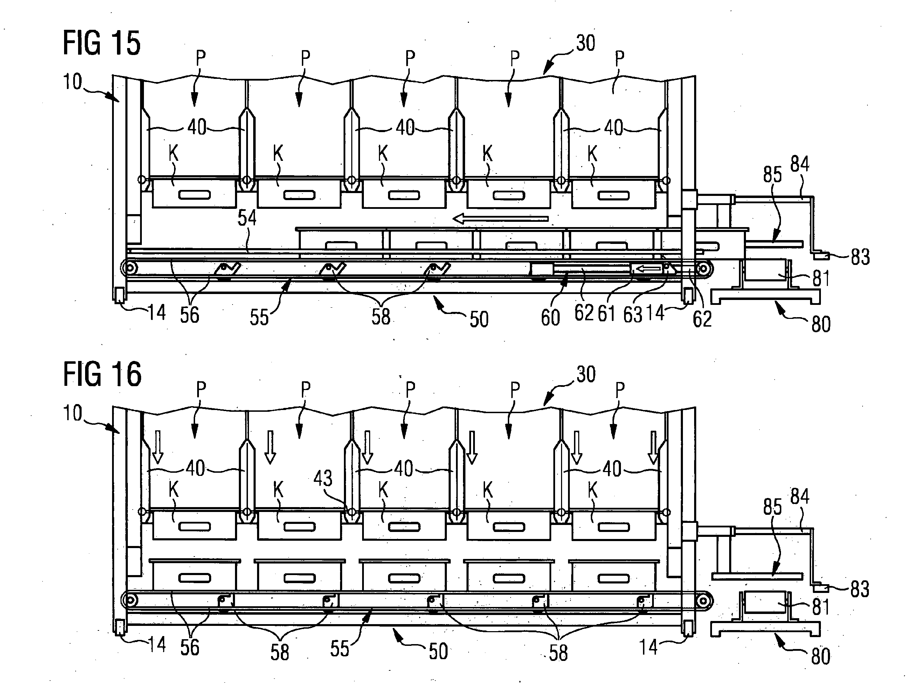

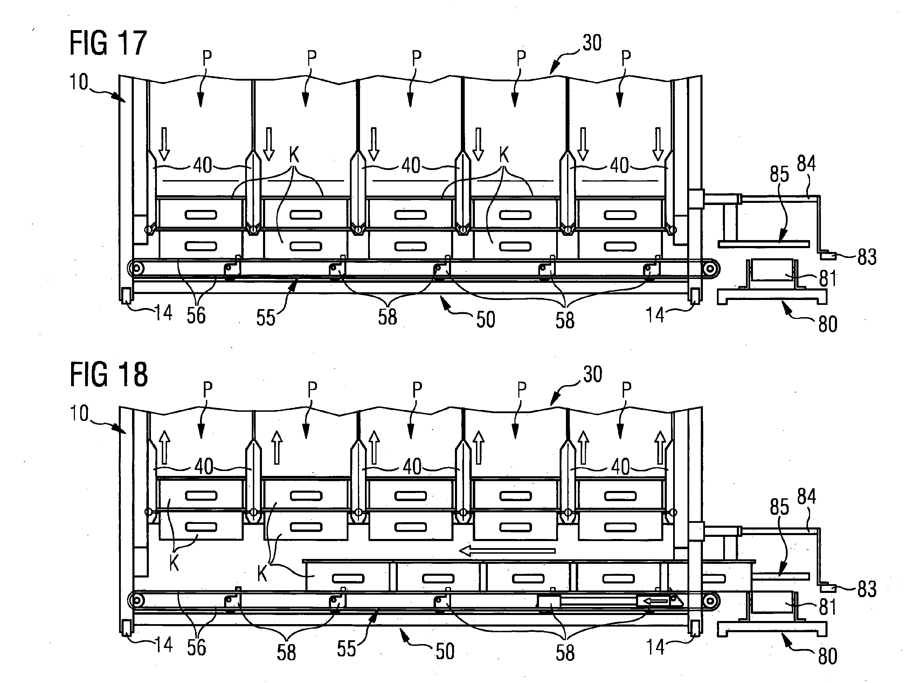

Wenn eine Reihe von Kisten K in den Kistenstapelplätzen P zwischen den Klinkenhaltern 40 gehalten wird und nach oben gefahren wurde (siehe Figur 15), kann eine weitere Reihe von Kisten K auf die Förderbänder 56 des Querförderers 55 der Abstelleinrichtung übergeben werden. Dies erfolgt in gleicher Weise, wie es zuvor anhand der Figuren 5 bis 9 erläutert wurde. Wenn diese neue Kistenreihe auf dem Querförderer 55 passend an den Kistenstapelplätzen P positioniert wurde, kann das Stapelhaltegestell 31 wieder heruntergefahren werden, so dass die bereits an den Kistenstapelplätzen P zwischen den Klinkenhaltern 40 gehaltenen Kisten K auf den auf der Abstelleinrichtung 50 stehenden Kisten K abgestellt werden (siehe Figur 16). Anschließend wird das Stapelhaltegestell 31 noch weiter nach unten gefahren, wobei die Halteklinken 43 wieder, wie dies bereits an den Figuren 9 und 10 erläutert wurde, eingefahren werden. Hierbei wird das Stapelhaltegestell 31 in eine Position verfahren, in der sich die Klinkenöffnungen 42 an den Klinkenhaltern 40 unterhalb der Bodenkante der auf der Abstelleinrichtung 50 befindlichen Kisten K befinden (siehe Figur 17). Wie anhand der Figuren 11 bis 14 erläutert, werden dann die Halteklinken 43 ausgefahren und das Stapelhaltegestell 31 mitsamt der neuen Kisten K bzw. den nun aus jeweils zwei Kisten K bestehenden Kistenstapeln S wieder nach oben gefahren, so dass dann eine weitere Reihe von Kisten K auf die Abstelleinrichtung 50 transportiert werden kann (siehe Figur 18).

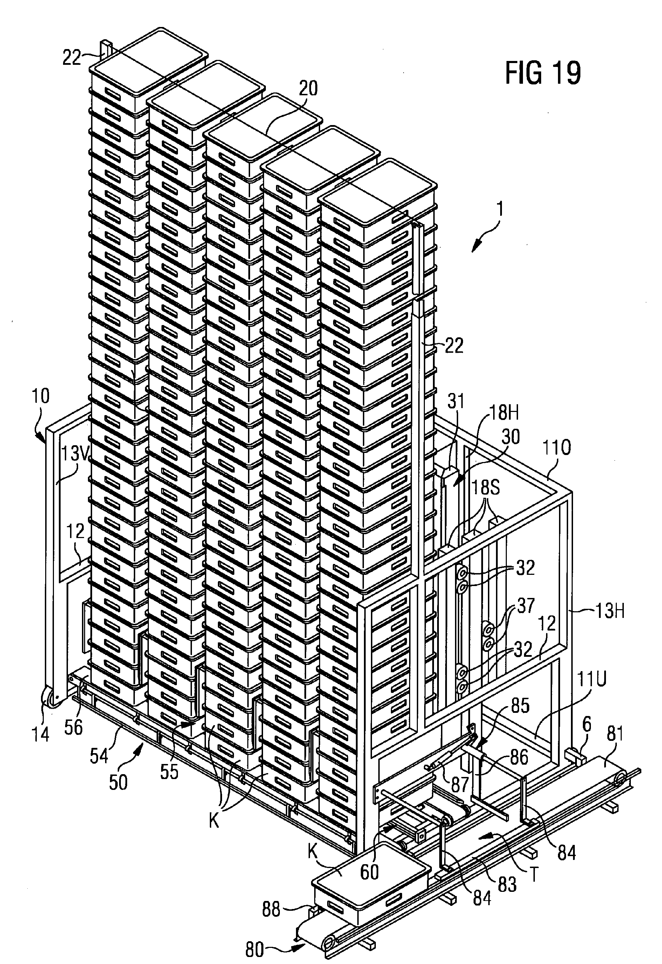

Die Einlagerung von Kisten K in die Kistenstapel S mittels der Vertikalstapeleinrichtung 30 geht dann so lange weiter, bis entweder keine Kisten K mehr eingelagert werden müssen oder die Kistenstapel S die zulässige Höhe erreicht haben. Dies kann mit Hilfe einer Höhenkontrolleinrichtung kontrolliert werden. Im vorliegenden Ausführungsbeispiel dient hierzu ein Seil 20, welches mit Hilfe von seitlich am Fahrgestell 10 angeordneten, nach oben ragenden Stangen 22 oberhalb der Vertikalstapeleinrichtung 30 gespannt ist. Die Höhe der Stangen beträgt hier ca. 6 m. Dieses Seil 20 kann beispielsweise auf einer Seite in oder an einer der Stangen 22 mit einem Zugsensor 21 verbunden sein, dessen Ausgangssignal einer geeigneten Steuereinrichtung zugeführt wird, so dass dieser Steuereinrichtung signalisiert wird, wenn die maximale Stapelhöhe erreicht ist. Ein solcher Zustand, in dem die maximale Stapelhöhe einer Reihe von Kistenstapeln S in der Vertikalstapeleinrichtung 30 erreicht ist, ist in Figur 19 dargestellt. Um nun weitere Kisten K einlagern zu können, müssen diese Kistenstapel S von der Vertikalstapeleinrichtung 30 auf dem Lagerboden abgesetzt werden, um dann eine neue Reihe von Kistenstapeln S aufbauen zu können.

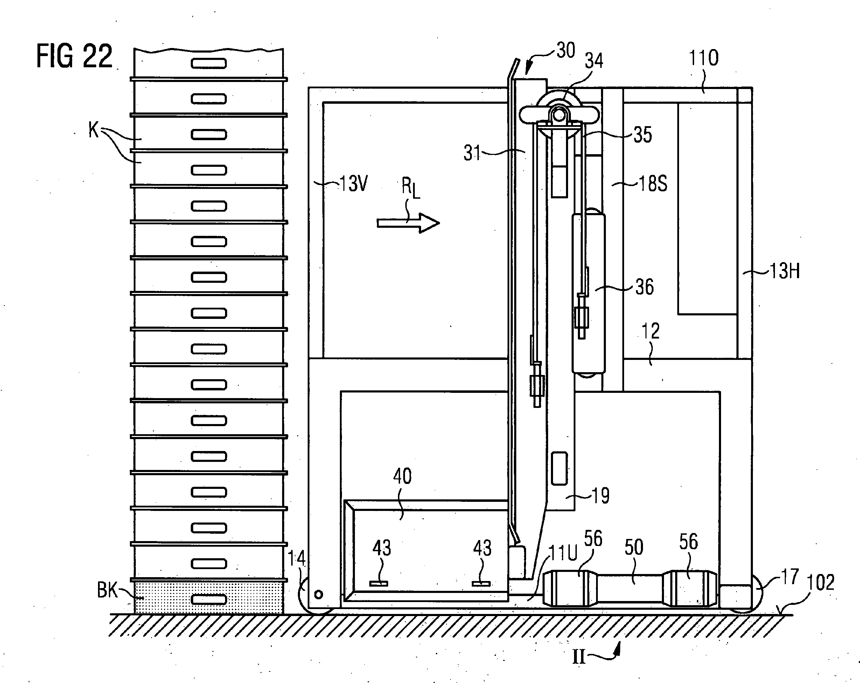

Bezüglich der Vorgehensweise beim Abstellen einer Kistenstapelreihe auf dem Lagerboden 102 wird auf die Figuren 20 und 21 verwiesen. Dabei zeigt die Figur 21 einen schematischen Schnitt in Längsrichtung R_{L} durch das Fahrgestell, wobei sich in der Vertikalstapeleinrichtung 30 eine fertige Reihe von Kistenstapeln S befindet. Das Stapelhaltegestell 31 der Vertikalstapeleinrichtung 30 befindet sich hierbei in einer Position, in der die Halteklinken 43 unter die Bodenkante der untersten Kiste BK der Kistenstapel S greifen, die in diesem Zustand noch auf der Abstelleinrichtung 50 stehen. Die kompletten Kistenstapel S werden dann von der Vertikalstapeleinrichtung 30 ein kurzes Stück angehoben, und die Abstelleinrichtung 50 mitsamt den Laufbändern 56 wird in die hintere Position II im rückwärtigen Teil des Fahrgestells 10 verschoben, indem der Scherenmechanismus 51 (siehe Figur 2) zusammengefahren wird. Somit ist der komplette Bereich unterhalb der Vertikalstapeleinrichtung 30 frei, so dass nun das Stapelhaltegestell 31 der Vertikalstapeleinrichtung 30 weiter nach unten in einer Absetzrichtung R_{A} in eine Absetzposition verfahren werden kann, in der die unterste Kiste BK auf dem Lagerboden 102 aufsetzt. Wenn diese Absetzposition erreicht ist, können die Halteklinken 43 an den Klinkenhaltern 40 eingefahren werden. Anschließend kann das gesamte Fahrgestell 10 in der Längsrichtung R_{L} von der gerade abgestellten Reihe der Kistenstapel S weggefahren werden, wie dies in Figur 22 dargestellt ist. Dabei wird das Fahrgestell 10 vorzugsweise genau so weit verfahren, dass es sich an einer nächsten passenden Rasterposition befindet, an der die nächste Reihe R1, R2, R3, ... von Kistenstapeln S aufgebaut werden soll, wie dies in Figur 24 gezeigt ist.

Anschließend kann dann das Stapelhaltegestell 31 mit den Klinkenhaltern 40 nach oben und mit Hilfe des Scherenmechanismus 51 die Abstelleinrichtung 50 mit dem Querförderer 55 wieder in die vordere Position I im Fahrgestell 10 verfahren werden. Die gesamte Kistenstapelvorrichtung 1 ist dann bereit, eine neue Reihe von Kistenstapeln S aufzubauen, wie dies zuvor erläutert wurde.

Eine Entnahme von Kisten K aus dem Kistenlager bzw. eine Entstapelung der Kisten K erfolgt in umgekehrter Weise. Zunächst kann zur Aufnahme einer neuen Reihe von Kistenstapeln S die Abstelleinrichtung 50 im Fahrgestell 10 in die hintere Position II verfahren werden. Das Stapelhaltegestell 31 der Vertikalstapeleinrichtung 30 wird ganz nach unten gefahren, wie dies in Figur 22 dargestellt ist. Nun bewegt sich aber das Fahrgestell 10 entgegen der Längsrichtung R_{L} in Richtung der fertigen Reihe R1, R2, R3, ... von Kistenstapeln S, um eine Reihe R1, R2, R3, ... von Kistenstapeln S aufzunehmen. Dabei fahren die Klinkenhalter 40 jeweils zwischen die Kistenstapel S. Anschließend werden dann die Halteklinken 43 an den Klinkenhaltern 40 ausgefahren, so dass die untersten Kiste der Kistenstapel S ergriffen werden kann, und das Stapelhaltegestell 31 wird soweit nach oben verfahren, dass die Abstelleinrichtung 50 mit dem Querförderer 55 wieder unter die im Stapelhaltegestell 31 gehaltenen Kistenstapel S verfahren werden kann. Es werden dann die Kistenstapel auf den Laufbändern 56 des Querförderers 55 der Abstelleinrichtung 50 abgestellt, wie dies in Figur 20 gezeigt ist. Das Stapelhaltegestell 31 mit den Klinkenhaltern 40 fährt anschließend genau um eine Kistenposition nach oben, wobei die Halteklinken 43 eingezogen sind. In dieser oberen Position werden die Halteklinken 43 wieder ausgefahren und das Stapelhaltegestell 31 weiter nach oben verfahren. Somit wird die unterste Kistenreihe, die aktuell auf den Bändern 56 des Querförderers 55 steht, isoliert. Die verbleibenden Teilstapel TS werden darüber in der Vertikalstapeleinrichtung 30 zwischen den Klinkenhaltern 40 gehalten.

Anschließend werden die Laufbänder 56 des Querförderers 55 mittels des Antriebs 57 so angetrieben, dass die Kisten K auf dem Querförderer 55 entgegen der Querrichtung R_{Q} zur Längsfördereinrichtung 80 hin befördert und endseitig an der Übergabeposition T ausgeschleust werden. Die Stopperelemente 57 sind hierbei nach unten gefahren, so dass sie die Kisten K nicht behindern. Damit außerdem die Haken 63 der Übergabeeinrichtung 60 überlaufen werden, ist der gesamte Querförderer 55 auf der zum Längsförderer 80 weisenden Seite im Fahrgestell 10 in einer Kipprichtung R_{K} etwas angehoben. Dies hat außerdem den Vorteil, dass die Kisten K an der Übergabestation T leichter auf das Laufband 81 der Längsfördereinrichtung 80 herunterkippen.

Um sicherzustellen, dass die Kisten K richtig auf dem Laufband 81 der Querfördereinrichtung 80 positioniert werden und nicht darüber hinaus vom Laufband 81 gekippt werden können, befindet sich an der Übergabestelle T ein Geländer 83, welches an Auslegern 84 befestigt ist, die am Fahrgestell 10 angeordnet sind und von dort brückenartig über das Laufband 81 der Längsfördereinrichtung 80 herüberragen. Somit befindet sich das Geländer 83 automatisch immer an der Übergabeposition T vor dem Fahrgestell 10. Der Arm 86 der Stoppereinrichtung 85 befindet sich bei der Ausgabe der Kisten K in einem hochgeschwenkten Zustand, so dass die ausgegebenen Kisten K in Längsrichtung R_{L} auf der Längsfördereinrichtung 80 weiterbefördert und endseitig ausgegeben werden können.

Selbstverständlich ist es prinzipiell auch möglich, die Längsfördereinrichtung 80 rückwärts zu betreiben und bei einer Ausgabe die Kisten K an derselben Stelle aus dem Lager auszuschleusen, an der sie auch eingeschleust werden. Dies hängt letztlich von den bautechnischen Gegebenheiten bzw. der Anordnung des Kistenlagers ab.

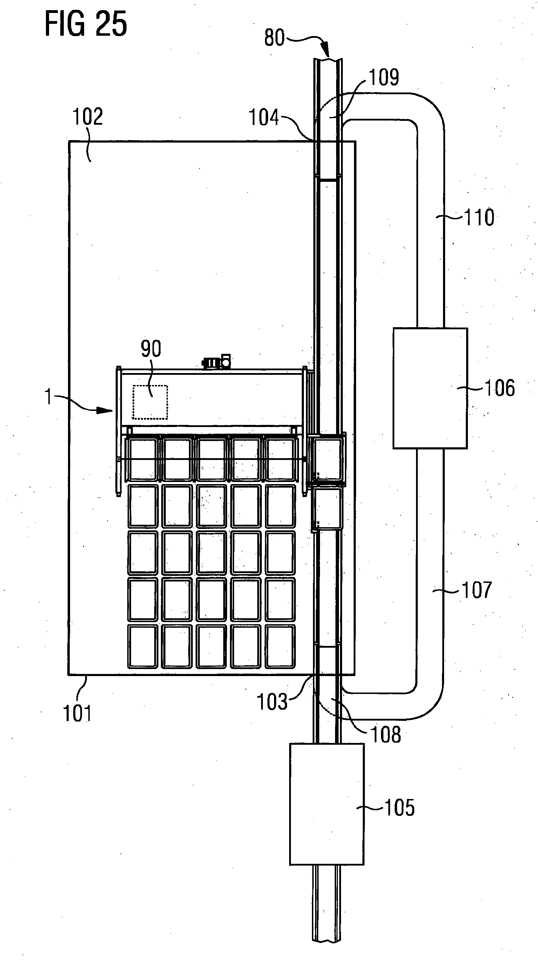

In Figur 25 ist noch einmal abschließend schematisch die Anordnung einer Kistenstapelvorrichtung 1, wie sie zuvor erläutert wurde, innerhalb eines Kistenstapellagers 100 dargestellt. Das Kistenstapellager 100 umfasst hier einen Lagerraum 101 mit einem Lagerboden 102. Auf der einen Seite befindet sich am Lagerraum 101 ein Eingang 103, an dem auf die Längsfördereinrichtung 80 Kisten K eingeschleust werden, und auf der anderen Seite ein Ausgang 104, an dem Kisten K wieder ausgelagert werden. Weiterhin befindet sich hier innerhalb des Lagerraums 101 noch ein Bodenkistenlager 106, in dem Bodenkisten BK zwischengelagert sind. Dieses Bodenkistenlager 106 ist über eine Zuführeinrichtung 107 und eine Weiche 108 am Eingang 103 mit der Längsfördereinrichtung 80 verbunden, um Bodenkisten BK auf die Längsfördereinrichtung 80 einzuschleusen. Auf der anderen Seite ist die Längsfördereinrichtung 80 in einem Abstand vom Ausgang 104 über eine Weiche 109 mit einer Rückführeinrichtung 110 verbunden, welche wiederum zum Bodenkistenlager 106 führt, um Bodenkisten BK von der Längsfördereinrichtung 80 wieder ins Bodenkistenlager 106 zurückzuführen. Diese Bodenkisten BK dienen dazu, dass zur Verwendung im Lebensmittelbereich dienende Kisten nicht direkt auf dem Lagerboden 102 abgestellt werden. Daher kann dafür gesorgt werden, dass aus dem Bodenkistenlager speziell markierte Bodenkisten BK immer als letzte unterste Reihe einer Kistenstapelreihe zugeführt werden. Beispielsweise kann hierzu die Höhenkontrolle am Fahrgestell 10 so eingerichtet sein, dass sie ein Signal ausgibt, bevor die maximale Kistenstapelhöhe (minus einer Kistenreihe) erreicht ist. Über eine Steuereinrichtung 90 wird dann dafür gesorgt, dass eine Reihe von Bodenkisten BK (siehe hierzu auch die Darstellung in den Figuren 20 bis 21) zugeführt wird, so dass die Kistenstapel S jeweils als unterste Kiste eine Bodenkiste BK enthalten. Dann werden die Kistenstapel S abgestellt. Umgekehrt wird in diesem Fall beim Entstapeln dafür gesorgt, dass die unterste Reihe von Kisten, nämlich die Bodenkisten BK, einer Kistenstapelreihe automatisch zurück in das Bodenkistenlager 106 ausgeschleust werden. Anstelle von Bodenkisten BK können selbstverständlich auch andere geeignete Bodenunterlagen verwendet werden.

Wie bereits eingangs erwähnt, kann ein erfindungsgemäßes Kistenstapellager 100 nicht nur eine Kistenstapelvorrichtung 1, sondern auch eine Mehrzahl von solchen Kistenstapelvorrichtungen 1 aufweisen, die beispielsweise koordiniert gesteuert werden, um ein First-In-/First-Out-Kistenstapellager zu realisieren. Ebenso kann ein Kistenstapellager noch eine Vielzahl weiterer Komponenten, beispielsweise, wie in Figur 25 symbolisch dargestellt, Waschanlagen 105, Sortieranlagen, Kontrollstationen etc. aufweisen.

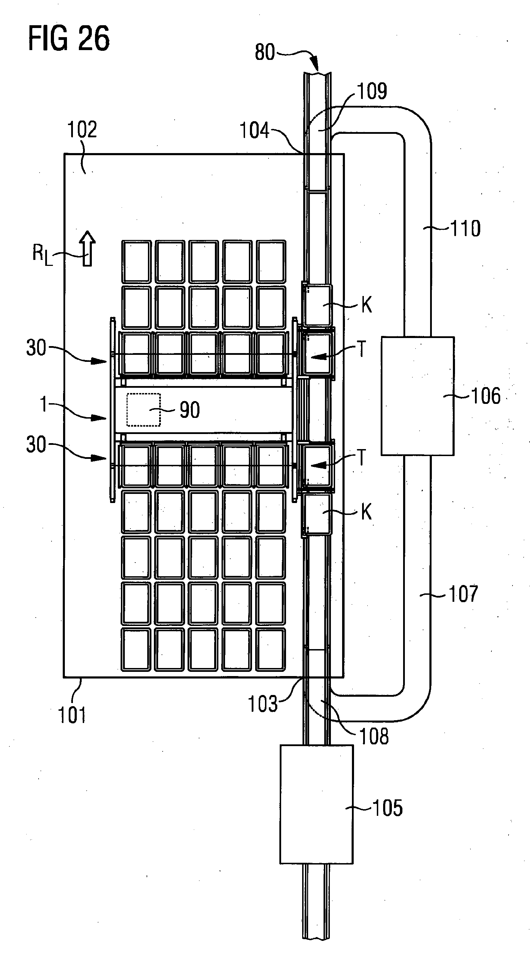

Eine weitere Variante einer erfindungsgemäßen Kistenstapelvorrichtung 1, die es erlaubt, bei ein- und demselben Verfahrvorgang entlang der Längsrichtung R_{L} oder zurück sowohl reihenweise Kisten einzulagern als auch auszulagern, wird in Figur 26 von oben dargestellt. Hierbei sind auf beiden Seiten am Fahrgestell 10, nämlich wie bisher rückseitig vom Fahrgestell 10 (in der Längsrichtung R_{L} betrachtet) aber nun auch zusätzlich frontseitig, Vertikalstapeleinrichtungen 30 angeordnet. Daher kann diese Kistenstapelvorrichtung 1 unabhängig davon, ob sie sich vorwärts oder rückwärts in der Längsrichtung R_{L} bewegt, Kisten einlagern bzw. auslagern. Dabei werden jeweils die Kisten der Kistenstapel-Reihen, die sich aktuell in Fahrrichtung vor dem Fahrgestell 10 befinden, ausgelagert und in Fahrtrichtung hinter dem Fahrgestell 10 können Kistenstapel-Reihen eingelagert werden.

Beide Vertikalstapeleinrichtungen 30 werden von einer gemeinsamen Abstelleinrichtung, hier wieder mit einem Querförderer, (in Figur 26 nicht gezeigt) bedient, die von einer mittleren Position (entsprechend der zweiten Position II) im Fahrgestell 10, wahlweise in zwei verschiedene, den beiden Vertikalstapeleinrichtungen 30 zugeordnete erste Positionen I verfahren werden kann, in denen sie sich jeweils vor bzw. an einer Transferposition T der jeweiligen Vertikalstapeleinrichtung 30 befindet, an der die einzulagernden bzw. auszulagernden Kisten K von der Längsförderereinrichtung 80 übernommen werden bzw. an diese übergeben werden.

Um eine Kistenstapel-Reihe weiterzufahren, müssen zunächst von der in Fahrtrichtung vorne liegenden Vertikalstapeleinrichtung 30 die Kisten der direkt vor dem Fahrgestell 10 stehenden Kistenstapel-Reihe angehoben werden. Die Abstelleinrichtung mit dem Querförderer wird dann unter die angehobenen Kisten gefahren und die Kisten werden an der der Vertikalstapeleinrichtung 30 zugeordneten Transferposition T auf die Längsförderereinrichtung 80 übergeben. Anschließend wird die Abstelleinrichtung wieder in die zweite Position II im Fahrgestell 10 verfahren und das gesamte Fahrgestell 10 verfährt eine Reihe nach vorne. Anschließend verfährt die Abstelleinrichtung (mit dem Querförderer) in die erste Position I der in Fahrtrichtung hinten liegenden Vertikalstapeleinrichtung 30, so dass diese nun an der ihr zugeordneten Transferposition T Kisten K von der Längsfördereinrichtung 80 übernehmen kann und eine neue Kistenstapel-Reihe in Fahrtrichtung hinter dem Fahrgestell 10 aufbauen kann.

Auf diese Weise wird dafür gesorgt, dass regelmäßig Kisten ausgetauscht werden und nicht zu lange im Lager verbleiben. Grundsätzlich ist es auch möglich, zwei solcher Fahrgestelle 10 mit jeweils zwei Vertikalstapeleinrichtungen 30 an einer Seite einer Längsförderereinrichtung 80 anzuordnen, umso ein First-in-First-out-Lager zu realisieren.

Die beiden Vertikalstapeleinrichtungen 30 sowie die diesen jeweils zugeordneten Komponenten an den Transferpositionen T (beispielsweise die Stoppereinrichtungen 8, 85 etc.) können jeweils identisch und in der gleichen Weise aufgebaut sein, wie dies für die weiter oben beschriebenen Ausführungsbeispiele der Fall ist. Sie sind lediglich bezüglich der Querrichtung R_{Q} gespiegelt am Fahrgestell 10 angeordnet bzw. ausgebildet. Auch das Fahrgestell 10 selber kann im Prinzip wie oben beschrieben ausgebildet sein, es muss lediglich dahingehend modifiziert sein, dass es auf beiden Seiten Vertikalstapeleinrichtung 30 tragen kann und diese beiden Vertikalstapeleinrichtungen 30 mit der gemeinsamen Abstelleinrichtung bzw. dem Querförderer koordiniert angesteuert werden können. Hierzu ist die Steuereinrichtung 90 entsprechend ausgebildet.
Sämtliche Antriebskomponenten innerhalb der Kistenstapelvorrichtung 1, wie beispielsweise der Antrieb 16 zum Verfahren des Fahrgestells 10, der Antrieb 52 zum Verfahren der Abstelleinrichtung 50 im Fahrgestell 10, der Antrieb für die Vertikalstapeleinrichtung 30, insbesondere zur Höhenverstellung des Stapelhaltegestells 31 und zum Ein- und Ausfahren der Halteklinken 43, sowie der Querfördereinrichtung 55, der Längsfördereinrichtung 80, der Weichen 108, 109 etc. können alle drahtlos oder durch Kabel, Lichtleiter etc. mit einer zentralen Steuerungseinheit 90 gekoppelt sein, so dass von dieser Steuerungseinheit 90 koordiniert sämtliche Vorgänge gesteuert werden können. Eine solche Steuereinrichtung kann auch dezentral aus mehreren Teilsteuereinheiten aufgebaut sein, die kommunikativ miteinander drahtlos oder per Kabel bzw. Lichtleiter in Verbindung stehen, um so koordiniert zusammenzuarbeiten. Dabei ist insbesondere auch eine zentrale Steuerung durch eine Mastersteuereinheit möglich, die die Vorgaben für alle anderen Teilsteuereinheiten koordiniert.

Wie unmittelbar ersichtlich ist, ist es mit einer erfindungsgemäßen Kistenstapelvorrichtung 1 möglich, sehr effektiv und platzsparend eine große Zahl von Kisten K einzulagern, wobei keine besonderen konstruktiven Bedingungen für den Lagerraum 101 gegeben sein müssen. Es reicht aus, einen ebenen Lagerboden 102 zur Verfügung zu stellen. Wenn dieser Lagerboden nicht zur Einlagerung von Kisten benötigt wird, kann er für andere Zwecke mitbenutzt werden, da der Lagerboden abgesehen von dem Raumbedarf für das Fahrgestell 10 und den Längsförderer 80 vollkommen frei ist. Weiterhin besteht hier der Vorteil, dass auch bei einem Stromausfall manuell oder mit einem herkömmlichen Gabelstapler Kisten bzw. ganze Kistenstapel aus dem Lager entnommen werden können..

Es wird abschließend noch einmal darauf hingewiesen, dass es sich bei den zuvor beschriebenen detaillierten Verfahren und Aufbauten um Ausführungsbeispiele handelt und dass das Grundprinzip auch in weiten Bereichen vom Fachmann variiert werden kann, ohne den Bereich der Erfindung zu verlassen, soweit er durch die Ansprüche vorgegeben ist. So wird beispielsweise in Figuren die Einlagerung und Auslagerung von jeweils einer Kistenreihe mit einzelnen Kisten beschrieben. Es ist aber auch möglich, gleichzeitig immer Reihen von zwei oder drei bereits übereinander gepackten Kisten einzulagern oder auszulagern. Dies hängt in erster Linie von der Höhe der Kisten ab. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

### Bezugszeichenliste

- 1: Kistenstapelvorrichtung
- 6: Führungshaken
- 7: Führungsblock
- 8: Stoppereinrichtung / Vorstopper
- 10: Fahrgestell
- 11O: oberen U-Rahmen
- 11U: unteren U-Rahmen
- 12: Querträger
- 13V: vordere Stützen
- 13H: hintere Stützen
- 14: Rad
- 15: Zwillingsrad
- 16: Motor
- 17: Stützräder
- 18H: vertikale Stützen
- 18S: vertikalen Streben
- 19: Halterahmen
- 20: Seil
- 21: Zugsensor
- 22: Stangen
- 30: Vertikalstapeleinrichtung
- 31: Stapelhaltegestell
- 32: Rollen
- 33: Wand
- 34: Umlenkrollen
- 35: Zugband
- 36: Gegengewicht
- 37: Rollen
- 40: Klinkenhalter
- 41: Gehäuse
- 41R: Rand
- 42: Klinkenöffnungen
- 42W: Auflager
- 43: Halteklinken
- 44: Eingriffsende
- 45: innenseitiges Ende
- 46: Drehachse
- 47: Stempel
- 48: Antriebsmotor
- 49: Traverse.
- 49W: Widerlager
- 50: Abstelleinrichtung
- 51: Scherenmechanismus
- 52: Hubzylinder
- 53: Gleitlager
- 54: Zentrierleisten
- 55: Querförderer
- 56: Transportbänder
- 57: Antrieb / Motor
- 58: Stopperelement
- 60: Übergabeeinrichtung
- 61: Laufwagen
- 62: Laufschiene
- 63: Haken
- 64: Drehpunkt
- 80: Längsfördereinrichtung
- 81: Förderband
- 83: Geländer
- 84: Ausleger
- 85: Stoppereinrichtung
- 86: Arm
- 87: Zylinder
- 88: Führungsschiene
- 90: Steuereinrichtung
- 100: Kistenstapellagers
- 101: Lagerraum
- 102: Lagerboden
- 103: Eingang
- 104: Ausgang
- 105: Waschanlage
- 106: Bodenkistenlager
- 107: Zuführeinrichtung
- 108: Weiche
- 109: Weiche
- 110: Rückführeinrichtung
- I: erste Position
- II: zweite Position
- BK: Bodenkisten
- K: Kiste
- P: Kistenstapelplätze
- R1, R2, R3, ...: Kistenstapel-Reihen
- R_{L}: ersten Bewegungsrichtung / Längsrichtung
- R_{Q}: zweite Bewegungsrichtung / Querrichtung
- R_{A}: Absetzrichtung
- R_{K}: Kipprichtung
- S: Kistenstapel
- S1, S2, S3, S4, S5: Kistenstapel-Spalten
- T: Transferposition
- T_{E}: Laufrichtung
- TS: Teilstapel

## Patentansprüche

1. Kistenstapelvorrichtung (1) mit
- einem Fahrgestell (10), welches entlang einer ersten horizontalen Bewegungsrichtung (R_{L}) verfahrbar ist,
- einer mit dem Fahrgestell (10) gekoppelten Vertikalstapeleinrichtung (30), welche so ausgebildet ist, dass sie bei einer Kistenaufnahme jeweils zumindest eine Kiste (K) von unten in einen in der vertikalen Stapeleinrichtung befindlichen Kistenstapel (S) aufnimmt und bei einer Kistenabgabe zumindest eine zuunterst in einem Kistenstapel (S) befindliche Kiste (K) abgibt,
- einer Abstelleinrichtung (50),
wobei die Abstelleinrichtung (50) und/oder die Vertikalstapeleinrichtung (30) in der ersten horizontalen Bewegungsrichtung (R_{L}) relativ zueinander zumindest von einer ersten Position (I), in der die Vertikalstapeleinrichtung (30) zumindest teilweise oberhalb der Abstelleinrichtung (50) angeordnet ist, in eine zweite Position (II) verfahrbar sind, in der die Vertikalstapeleinrichtung (30) und die Abstelleinrichtung (50) so zueinander angeordnet sind, dass von der Vertikalstapeleinrichtung (30) ein Kistenstapel (S) neben der Abstelleinrichtung (50) auf einem Lagerboden (102) abgestellt oder vom Lagerboden (102) aufgehoben werden kann.

2. Kistenstapelvorrichtung nach Anspruch 1, **dadurch gekennzeichnet, dass** die Abstelleinrichtung (50) mit einer Antriebseinrichtung (51, 52) zur Bewegung der Abstelleinrichtung (50) gegenüber der Vertikalstapeleinrichtung (30) in der ersten Bewegungsrichtung (R_{L}) versehen ist und vorzugsweise am Fahrgestell (10) in der ersten Bewegungsrichtung (R_{L}) beweglich gelagert ist.

3. Kistenstapelvorrichtung nach Anspruch 1 oder 2, **dadurch gekennzeichnet, dass** die Abstelleinrichtung (50) einen Querförderer (55) umfasst, welcher ausgebildet ist, um aus- oder einzulagernde Kisten (K) in einer zweiten Richtung (R_{Q}) quer zur ersten Richtung (R_{L}) zu transportieren.

4. Kistenstapelvorrichtung nach einem der Ansprüche 1 bis 3, **dadurch gekennzeichnet, dass** die Vertikalstapeleinrichtung (30) mehrere in einer quer zur ersten Bewegungsrichtung (R_{L}) nebeneinander angeordnete Kistenstapelplätze (P) aufweist.

5. Kistenstapelvorrichtung nach einem der Ansprüche 1 bis 4, **gekennzeichnet durch** eine entlang der ersten Bewegungsrichtung (R_{L}) neben dem Fahrgestell (10) verlaufende Längsfördereinrichtung (80).

6. Kistenstapelvorrichtung nach Anspruch 5, **gekennzeichnet durch** eine Kistenübergabeeinrichtung (60) zur Übergabe von Kisten (K) zwischen der Längsfördereinrichtung (80) und der Abstelleinrichtung (50).

7. Kistenstapelvorrichtung nach Anspruch 5 oder 6, **gekennzeichnet durch** eine Stoppereinrichtung (85, 88), um eine auf der Längsfördereinrichtung (80) neben dem Fahrgestell (10) in der ersten Bewegungsrichtung (R_{L}) verlaufende Kiste (K) an einer relativ zum Fahrgestell (10) vorgegebenen Position zu stoppen.

8. Kistenstapelvorrichtung nach einem der Ansprüche 1 bis 7, **dadurch gekennzeichnet, dass** die Vertikalstapeleinrichtung (30) an einem vertikal verfahrbaren Stapelhaltegestell (31) beweglich gelagerte Halteklinken (43) aufweist, die in einer Halteposition zum Halten einer Kiste (K) in einem Abstand über dem Boden der Kiste (K) an zwei gegenüberliegenden Seiten an der Kiste (K) angreifen.

9. Kistenstapelvorrichtung nach Anspruch 8, **dadurch gekennzeichnet, dass** das Stapelhaltegestell (31) sich benachbart zu einem Kistenstapelplatz (P) erstreckende Klinkenhalter (40) aufweist, an denen jeweils Halteklinken (43) beweglich gelagert sind, so dass sie in der Halteposition in den Kistenstapelplatz (P) hineinragen und an einer Seite an der Kiste (K) angreifen.

10. Kistenstapelvorrichtung nach einem der Ansprüche 8 oder 9, **dadurch gekennzeichnet, dass** eine Halteklinke (43) so beweglich gelagert ist, dass sie sich in der Halteposition entgegen einer in Richtung der Schwerkraft auf das äußere in die Kiste (K) eingreifende Ende (44) wirkenden Kraft an einem Widerlager (49) abstützt.

11. Kistenstapelvorrichtung nach einem der Ansprüche 1 bis 10, **gekennzeichnet durch** eine Steuereinrichtung (90), welche mit Antriebseinrichtungen des Fahrgestells (10), der Vertikalstapeleinrichtung (30) und der Abstelleinrichtung (50) verbunden ist und diese zum Einlagern von Kisten (K) derart ansteuert, dass
a) auf die Abstelleinrichtung (50) eine Anzahl von Kisten (K) zugeführt wird,
b) die Vertikalstapeleinrichtung (30) die Kisten (K) anhebt,
c) auf die Abstelleinrichtung (50) eine neue Anzahl von Kisten (K) zugeführt wird,
d) die Vertikalstapeleinrichtung (30) die von der Vertikalstapeleinrichtung (30) gehaltenen Kisten (K) auf den neuen Kisten (K) abstellt und dann die neuen Kisten (K) mit den darüber befindlichen Kisten (K) anhebt,
e) die Schritte c) und d) wiederholt werden, bis eine Stapel-Abbruchbedingung erreicht ist,
f) die Abstelleinrichtung (50) und/oder die Vertikalstapeleinrichtung (30) relativ gegeneinander um zumindest eine erste bestimmte Weglänge in der ersten Bewegungsrichtung (R_{L}) verfahren werden,
g) die Vertikalstapeleinrichtung (30) die Kistenstapel (S) auf einem Lagerboden (102) abstellt.

12. Kistenstapellager (100) mit einer Kistenstapelvorrichtung (1) nach einem der Ansprüche 1 bis 11.

13. Verfahren zum Stapeln von Kisten (K) mittels einer Kistenstapelvorrichtung (1) nach einem der Ansprüche 1 bis 11, welche ein Fahrgestell (10) mit einer Vertikalstapeleinrichtung (30) sowie eine Abstelleinrichtung (50) aufweist, bei dem
a) auf die Abstelleinrichtung (50) eine Anzahl von Kisten (K) zugeführt wird,
b) mittels der Vertikalstapeleinrichtung (30) die Kisten (K) angehoben werden,
c) auf die Abstelleinrichtung (50) eine neue Anzahl von Kisten (K) zugeführt wird,
d) mittels der Vertikalstapeleinrichtung (30) die von der Vertikalstapeleinrichtung (30) gehaltenen Kisten (K) auf den neuen Kisten (K) abgestellt werden und dann die neuen Kisten (K) mit den darüber befindlichen Kisten (K) angehoben werden,
e) die Schritte c) und d) wiederholt werden, bis eine Stapel-Abbruchbedingung erreicht ist,
f) die Abstelleinrichtung (50) und/oder die Vertikalstapeleinrichtung (30) relativ gegeneinander um zumindest eine erste bestimmte Weglänge in eine erste Bewegungsrichtung (R_{L}) verfahren werden,
g) von der Vertikalstapeleinrichtung (30) eine Anzahl von Kistenstapeln (S) auf einem Lagerboden (102) abgestellt werden.

14. Verfahren nach Anspruch 13, **dadurch gekennzeichnet, dass** bei Erreichen der Stapel-Abbruchbedingung zunächst auf die Abstelleinrichtung (50) eine Anzahl Bodenabstandshalter (BK) zugeführt werden und mittels der Vertikalstapeleinrichtung (30) die von der Vertikalstapeleinrichtung (30) gehaltenen Kisten (K) auf den Bodenabstandshaltern (BK) abgestellt und dann die Bodenabstandshalter (BK) mit den darüber befindlichen Kisten (K) angehoben werden, bevor die Abstelleinrichtung (50) und/oder die Vertikalstapeleinrichtung (30) relativ gegeneinander um zumindest die erste bestimmte Weglänge in der ersten Bewegungsrichtung (R_{L}) verfahren werden und die Vertikalstapeleinrichtung (30) die Kistenstapel (S) mitsamt den Bodenabstandshaltern (BK) auf dem Lagerboden (102) abstellt.

15. Verfahren zum Entstapeln von Kisten (K) mittels einer Kistenstapelvorrichtung (1) nach einem der Ansprüche 1 bis 11, welche ein Fahrgestell (10) mit einer Vertikalstapeleinrichtung (50) sowie eine Abstelleinrichtung (50) aufweist, bei dem
a) mittels der Vertikalstapeleinrichtung (30) eine Anzahl von Kistenstapeln (S) untenseitig ergriffen und von einem Lagerboden (102) aufgehoben werden,
b) die Abstelleinrichtung (50) und/oder die Vertikalstapeleinrichtung (30) relativ gegeneinander um zumindest eine erste bestimmte Weglänge entgegen einer ersten Bewegungsrichtung (R_{L}) verfahren werden,
c) von der Vertikalstapeleinrichtung (30) die Kistenstapel (S) auf der Abstelleinrichtung (50) abgestellt werden,
d) mittels der Vertikalstapeleinrichtung (30) jeweils ein Teilstapel (TS) der Anzahl von Kistenstapeln (S) angehoben wird, so dass zumindest eine Kiste (K) des Kistenstapels (S) auf der Abstelleinrichtung (50) verbleibt,
e) die auf der Abstelleinrichtung (50) verbleibenden Kisten (K) des Kistenstapels (S) weg befördert werden,
f) die Schritte c) bis e) wiederholt werden, bis eine Entstapel-Abbruchbedingung erreicht ist.

## Claims

1. A crate stacking device (1) comprising
- a travelling mechanism (10), which can be moved along a first horizontal direction of movement (R_{L}),
- a vertical stacking device (30), which is coupled to the travelling mechanism (10) and which is embodied such that, in response to accommodating a crate, it in each case accommodates at least one crate (K) from below into a crate stack (S), which is located in the vertical stacking device, and which, in response to releasing a crate, it releases at least one crate (K) located at the very bottom in a crate stack (S),
- a storage device (50),
wherein, in the first horizontal direction of movement (R_{L}), the storage device (50) and/or the vertical stacking device (30) can be moved relative to one another at least from a first position (I), in which the vertical stacking device (30) is at least partially arranged above the storage device (50), into a second position (II), in which the vertical stacking device (30) and the storage device (50) are arranged relative to one another such that the vertical stacking device (30) can place a crate stack (S) next to the storage device (50) onto a warehouse floor (102) or can be lifted off the warehouse floor (102).

2. The crate stacking device according to claim 1, **characterized in that** the storage device (50) is provided with a drive device (51, 52) for moving the storage device (50) relative to the vertical stacking device (30) in the first direction of movement (R_{L}) and is preferably supported on the travelling mechanism (10) so as to be movable in the first direction of movement (R_{L}).

3. The crate stacking device according to claim 1 or 2, **characterized in that** the storage device (50) comprises a cross conveyor (55), which is embodied to transport crates (K), which are to be retrieved or stored, in a second direction (R_{Q}) at right angles to the first direction (R_{L}).

4. The crate stacking device according to one of claims 1 to 3, **characterized in that** the vertical stacking device (30) encompasses a plurality of crate stacking areas (P), which are arranged next to one another at right angles to the first direction of movement (R_{L}).

5. The crate stacking device according to one of claims 1 to 4, **characterized by** a longitudinal conveying device (80), which runs along the first direction of movement (R_{L}) next to the travelling mechanism (10).

6. The crate stacking device according to claim 5, **characterized by** a crate transfer device (60) for transferring crates (K) between the longitudinal conveying device (80) and the storage device (50).

7. The crate stacking device according to claim 5 or 6, **characterized by** a stopper device (85, 88) for stopping a crate (K), which runs on the longitudinal conveying device (80) next to the travelling mechanism (10) in the first direction of movement (RL), at a position, which is provided relative to the travelling mechanism (10).

8. The crate stacking device according to one of claims 1 to 7, **characterized in that**, at a vertically movable stack holding frame (31), the vertical stacking device (30) encompasses movably supported holding handles (43), which act on the crate (K) on two opposite sides in a holding position for holding a crate (K) at a distance above the bottom of the crate (K).

9. The crate stacking device according to claim 8, **characterized in that** the stack holding frame (31) encompasses handle holders (40), which extend adjacent to a crate stacking area (P) and at which holding handles (43) are in each case movably supported so that, in the holding position, they project into the crate stacking area (P) and act on the crate (K) on one side.

10. The crate stacking device according to one of claims 8 or 9, **characterized in that** a holding handle (43) is movably supported such that, in the holding position, said holding handle is supported by a support (49) against a force, which acts on the outer end (44), which engages with the crate (K), in the direction of the force of gravity.

11. The crate stacking device according to one of claims 1 to 10, **characterized by** a control device (90), which is connected to drive devices of the travelling mechanism (10), the vertical stacking device (30) and the storage device (50) and which, for storing crates (K), drives them such that
a) a number of crates (K) is fed to the storage device (50),
b) the vertical stacking device (30) lifts the crates (K),
c) a new number of crates (K) is fed to the storage device (50),
d) the vertical stacking device (30) places the crates (K), which are held by the vertical stacking device (30), onto the new crates (K) and then lifts the new crates (K) with the crates (K) located thereabove,
e) the steps c) and d) are repeated until a stacking stop condition has been reached,
f) the storage device (50) and/or the vertical stacking device (30) are moved relative against one another by at least a first specific path length in the first direction of movement (R_{L}),
g) the vertical stacking device (30) places the crate stacks (S) onto a warehouse floor (102).

12. A crate stack storage (100) comprising a crate stacking device (1) according to one of claims 1 to 11.

13. A method for stacking crates (K) by means of a crate stacking device (1) according to one of claims 1 to 11, which encompasses a travelling mechanism (10) comprising a vertical stacking device (30) as well as a storage device (50), in the case of which
a) a number of crates (K) is fed to the storage device (50),
b) the crates (K) are lifted by means of the vertical stacking device (30),
c) a new number of crates (K) is fed to the storage device (50),
d) the crates (K), which are held by the vertical stacking device (30), are placed onto the new crates (K) by means of the vertical stacking device (30) and the new crates (K) are then lifted with the crates (K) located thereabove,
e) the steps c) and d) are repeated until a stacking stop condition has been reached,
f) the storage device (50) and/or the vertical stacking device (30) are moved relative against one another by at least a first specific path length in a first direction of movement (R_{L}),
g) a number of crate stacks (S) is placed onto a warehouse floor (102) by means of the vertical stacking device (30).

14. The method according to claim 13, **characterized in that**, in response to reaching the stacking stop condition, a number of floor spacers (BK) are initially fed to the storage device (50) and the crates (K), which are held by the vertical stacking device (30), are placed onto the floor spacers (BK) by means of the vertical stacking device (30), and the floor spacers (BK) are then lifted with the crates (K) located thereabove before the storage device (50) and/or the vertical stacking device (30) are moved relative against one another by at least the first certain path length in the first direction of movement (R_{L}) and the vertical stacking device (30) places the crate stacks (S) onto the warehouse floor (102) together with the floor spacers (BK).

15. A method for unstacking crates (K) by means of a crate stacking device (1) according to one of claims 1 to 11, which encompasses a travelling mechanism (10) comprising a vertical stacking device (50) as well as a storage device (50), in the case of which
a) a number of crate stacks (S) are seized on the bottom side and are lifted off a warehouse floor (102) by means of the vertical stacking device (30),
b) the storage device (50) and/or the vertical stacking device (30) are moved relative against one another by at least a first specific path length opposite a first direction of movement (R_{L}),
c) the vertical stacking device (30) places the crate stacks (S) onto the storage device (50),
d) a partial stack (TS) of the number of crate stacks (S) is in each case lifted by means of the vertical stacking device (30) so that at least one crate (K) of the crate stack (S) remains on the storage device (50),
e) the crates (K) of the crate stack (S) remaining on the storage device (50) are transported away,
f) the steps c) to e) are repeated until an unstacking stop condition has been reached.

## Revendications

1. Dispositif d'empilage de caisses (1) avec
- un châssis (10), lequel est déplaçable le long d'une première direction de déplacement (R_{L}) horizontale,
- un système d'empilage (30) vertical, accouplé au châssis (10), lequel est conçu de telle sorte que lors d'une prise en charge d'une caisse, il prenne chaque fois par le bas au moins une caisse (K) dans une pile de caisses (S) se trouvant dans le système d'empilage vertical et que lors d'une restitution d'une caisse, il restitue au moins une caisse (K) se trouvant le plus bas dans une pile de caisses (S),
- un système de dépose (50),
dans la première direction de déplacement (R_{L}) horizontale, le système de dépose (50) et/ou le système d'empilage (30) vertical étant déplaçables l'un par rapport à l'autre au moins d'une première position (I), dans laquelle le système d'empilage (30) vertical est placé au moins en partie au-dessus du système de dépose (50) dans une deuxième position (II), dans laquelle le système de d'empilage (30) vertical et le système de dépose (50) sont placés l'une par rapport à l'autre de telle sorte que par le système d'empilage (30) vertical une pile de caisses (S) puisse être déposée à côté du système de dépose (50) sur un sol d'entreposage (102) ou puisse être soulevée à partir du sol d'entreposage (102).

2. Dispositif d'empilage de caisses selon la revendication 1, **caractérisé en ce que** le système de dépose (50) est muni d'un système d'entraînement (51, 52) destiné à déplacer le système de dépose (50) par rapport au système d'empilage (30) vertical dans la première direction de déplacement (R_{L}) et est logé de préférence sur le châssis (10) en étant mobile dans la première direction de déplacement (R_{L}).

3. Dispositif d'empilage de caisses selon la revendication 1 ou la revendication 2, **caractérisé en ce que** le système de dépose (50) comprend un transporteur transversal (55) lequel est conçu pour transporter des caisses (K) à déstocker ou à stocker dans une deuxième direction de déplacement (R_{Q}), à la transversale de la première direction (R_{L}).

4. Dispositif d'empilage de caisses selon l'une quelconque des revendications 1 à 3, **caractérisé en ce que** le système d'empilage (30) vertical comporte plusieurs emplacements d'empilage (P) de caisses placés les uns à côté des autres, à la transversale de la première direction de déplacement (R_{L}).

5. Dispositif d'empilage de caisses selon l'une quelconque des revendications 1 à 4, **caractérisé par** un système de transport (80) longitudinal, se déplaçant le long de la première direction de déplacement (R_{L}), à côté du châssis (10).

6. Dispositif d'empilage de caisses selon la revendication 5, **caractérisé par** un système de transfert (60) de caisses, destiné à transférer des caisses (K) entre le système de transport (80) longitudinal et le système de dépose (50).

7. Dispositif d'empilage de caisses selon la revendication 5 ou la revendication 6, **caractérisé par** un dispositif d'arrêt (85, 88), pour arrêter une caisse (K) se déplaçant sur le système de transport (80) longitudinal à côté du châssis (10) dans la première direction de déplacement (R_{L}) à une position prédéfinie par rapport au châssis (10).

8. Dispositif d'empilage de caisses selon l'une quelconque des revendications 1 à 7, **caractérisé en ce que** le système d'empilage (30) vertical comporte des cliquets d'arrêt (43) logés en étant mobiles sur un cadre de maintien (31) de piles déplaçable à la verticale, qui dans une position de maintien, destinée à maintenir une caisse (K) s'engagent avec un écart au-dessus du fond de la caisse (K) sur deux côtés opposés sur la caisse (K).

9. Dispositif d'empilage de caisses selon la revendication 8, **caractérisé en ce que** le cadre de maintien (31) de piles comporte des porte-cliquets (40) s'étendant au voisinage d'un emplacement d'empilage (P) de caisses, sur lequel des cliquets d'arrêt (43) sont respectivement logés en étant mobiles, de sorte que dans la position de maintien, ils saillissent dans l'emplacement d'empilage (P) de caisses et s'engagent sur un côté sur la caisse (K).

10. Dispositif d'empilage de caisses selon l'une quelconque des revendications 8 ou 9, **caractérisé en ce qu'**un cliquet de maintien (43) est logé en étant si mobile que dans la position de maintien, il s'appuie sur une butée (49), à l'encontre d'une force agissant en direction de la force de gravité sur l'extrémité (44) extérieure qui s'engage dans la caisse (K).

11. Dispositif d'empilage de caisses selon l'une quelconque des revendications 1 à 10, **caractérisé par** un système de commande (90), lequel est relié à des systèmes d'entraînement du châssis (10), du système d'empilage (30) vertical et du système de dépose (50) et qui amorce ces derniers pour le stockage de caisses (K) de telle sorte
a) qu'un nombre de caisses (K) soit alimenté sur le système de dépose (50),
b) que le système d'empilage (30) vertical soulève les caisses (K),
c) qu'un nouveau nombre de caisses (K) soit alimenté sur le système de dépose (50),
d) que le système d'empilage (30) vertical dépose les caisses (K) maintenues par le système d'empilage (30) vertical sur les nouvelles caisses (K) et soulève ensuite les nouvelles caisses (K) avec les caisses (K) situées au-dessus,
e) que les étapes c) et d) soient répétées jusqu'à ce qu'une condition d'interruption d'empilage soit atteinte,
f) que le système de dépose (50) et/ou le système d'empilage (30) vertical soient déplacés l'un contre l'autre de la valeur d'au moins une course définie dans la première direction de déplacement (R_{L}),
g) que le système d'empilage (30) vertical dépose les piles (S) de caisses sur un sol d'entreposage (102).

12. Entrepôt d'empilage de caisses (100) avec un système d'empilage de caisses (1) selon l'une quelconque des revendications 1 à 11.

13. Procédé destiné à empiler des caisses (K) au moyen d'un dispositif d'empilage de caisses (1) selon l'une quelconque des revendications 1 à 11, lequel comporte un châssis (10) avec un système d'empilage (30) vertical ainsi qu'un système de dépose (50), lors duquel
a) sur le système de dépose (50) est alimenté un nombre de caisses (K),
b) les caisses (K) sont soulevées au moyen d'un système d'empilage (30) vertical,
c) sur le système de dépose (50) est alimenté un nouveau nombre de caisses (K),
d) au moyen du système d'empilage (30) vertical, les caisses (K) maintenues par le système d'empilage (30) vertical sont déposées sur les nouvelles caisses (K) et ensuite les nouvelles caisses (K) sont soulevées, avec les caisses (K) situées au-dessus,
e) les étapes c) et d) sont répétées jusqu'à l'atteinte d'une condition d'interruption d'empilage,
f) le système de dépose (50) et/ou le système d'empilage (30) vertical sont déplacés l'un par rapport à l'autre, de la valeur d'au moins une première course définie dans une première direction de déplacement (R_{L}),
g) le système d'empilage (30) vertical dépose un nombre de piles (S) de caisses sur un sol d'entreposage (102).

14. Procédé selon la revendication 13, **caractérisé en ce qu'**à l'atteinte de la condition d'interruption d'empilage, d'abord un nombre d'écarteurs au sol (BK) est alimenté sur le système de dépose (50) et au moyen du système d'empilage (30) vertical, les caisses (K) maintenues par le système d'empilage (30) vertical sont déposées sur les écarteurs au sol (BK) et ensuite les écarteurs au sol (BK) avec les caisses (K) situées au-dessus sont soulevés, avant que le système de dépose (50) et/ou le système d'empilage (30) vertical soient déplacés l'un par rapport à l'autre de la valeur d'au moins la première course dans la première direction de déplacement (R_{L}) et le système d'empilage (30) vertical dépose les piles (S) de caisses avec les écarteurs au sol (BK) sur le sol d'entreposage (102).

15. Procédé destiné à désempiler des caisses (K) au moyen d'un dispositif d'empilage de caisses (1) selon l'une quelconque des revendications 1 à 11, lequel comporte un châssis (10) avec un système d'empilage (30) vertical, ainsi qu'un système de dépose (50), lors duquel
a) au moyen du système d'empilage (30) vertical, un nombre de piles (S) de caisses est saisi par le dessous et soulevé d'un sol (102) d'entreposage,
b) le système de dépose (50) et/ou le système d'empilage (30) vertical sont déplacés l'un par rapport à l'autre de la valeur d'au moins une première course définie, à l'encontre de la première direction de déplacement (R_{L}),
c) le système d'empilage (30) vertical dépose les piles (S) de caisses sur le système de dépose (50),
d) au moyen du système d'empilage (30) vertical, chaque fois une pile partielle (TS) du nombre de piles (S) de caisses est soulevée, de telle sorte, qu'au moins une caisse (K) de la pile (S) de caisses reste sur le système de dépose (50),
e) les caisses (K) restant sur le système de dépose (50) sont transportées loin de la pile (S) de caisses,
f) les étapes c) à e) sont répétées jusqu'à l'atteinte d'une condition d'interruption de désempilage.
